# EUROPEAN PATENT APPLICATION

(11) **EP 3 355 254 A1**
(43) Date of publication of application: **01.08.2018**
(21) Application number: 18153420.7
(22) Date of filing: 25.01.2018
(51) Int. Cl.: G06Q 10/08

(54) **METHOD FOR ONLINE DELIVERY SYSTEM, MANAGEMENT APPARATUS, AND RECORDING MEDIUM HAVING PROGRAM STORED THEREIN**

(30) Priority: 30.01.2017 JP 2017014723
(71) Applicant: Panasonic Intellectual Property Corporation of America, Torrance, CA 90503 (US)
(72) Inventor: KUHARA, Shunsuke, Osaka-shi, Osaka 540-6207 (JP)
(74) Representative: Grünecker Patent- und Rechtsanwälte PartG mbB

(57) **Abstract**

A method is provided for an online delivery system that includes a management apparatus and a customer terminal for communicating with the management apparatus through a network. Delivery destination information regarding a delivery destination of a package is received from a customer terminal. Designation of a package delivery method using a self-driving vehicle is accepted from the customer terminal. Based on the delivery destination information, the method determines a delivery destination area corresponding to the delivery destination information. The method decides, based on the delivery destination area, whether or not parking and stopping of vehicles are prohibited in the delivery destination area. The method generates first notification information indicating whether or not delivery to the delivery destination indicated by the delivery destination information is possible using the self-driving vehicle, and transmits the first notification information to the customer terminal.

## Description

### BACKGROUND

### 1. Technical Field

The present disclosure relates to a method for an online delivery system, a management apparatus, and a recording medium having a program stored therein.

### 2. Description of the Related Art

An online shopping system has been known that receives product orders from customer terminals used by customers through networks, such as the Internet, and that delivers products (see, e.g., Japanese Unexamined Patent Application Publication No. 2004-334444). In this online shopping system, when a customer orders a product by using his or her customer terminal, pieces of information regarding delivery methods for the product are displayed on the customer terminal. This allows the customer to designate a delivery method corresponding to the customer's desire among the delivery methods.

In addition, an online delivery system using a self-driving vehicle, which travels automatically in an unmanned manner, has been proposed in recent years (see, e.g., U.S. Patent No. 9,256,852). In this online delivery system, the self-driving vehicle having one or more lockers therein travels from a delivery center to the delivery destination (e.g., in front of the user's home) of the package. When the self-driving vehicle arrives at the package delivery destination, the user leaves the home and goes to the self-driving vehicle and can retrieve the package from the corresponding locker in the self-driving vehicle.

In contrast, when a driver of a delivery company delivers the package by using a vehicle, and the vehicle arrives at the package delivery destination, the driver delivers the package to the front door of the home of the user, so that the user can directly receive the package from the driver while staying at home.

Thus, in the online delivery system using a self-driving vehicle, although the time and effort of the user increase, the driver of the delivery company becomes unnecessary to thereby make it possible to reduce the driver labor cost. As a result, the delivery fee can be set low, compared with delivery using a vehicle driven by the driver. In particular, delivery in a time slot in which the driver labor cost increases (e.g., early in the morning or late at night) can be performed at low cost. Also, since the user can receive a package without the driver knowing the user's address, it is possible to protect the personal information of the user.

It is thought that when the self-driving vehicles described above become widely available in the future, applying the online delivery system in U.S. Patent No. 9,256,852 to the online shopping system in Japanese Unexamined Patent Application Publication No. 2004-334444 allows a product delivery method using a self-driving vehicle to be designated as one option of the product delivery method.

However, when the customer designates, as a product delivery method in the online shopping system, a delivery method using a self-driving vehicle merely according to the customer' desire, a problem as described below arises.

When the customer designates a product delivery method using a self-driving vehicle, the self-driving vehicle needs to be parked or stopped at the delivery destination and to wait from when it arrives at the delivery destination until the customer retrieves the product from the corresponding locker in the self-driving vehicle. In this case, the customer may designate the product delivery method using the self-driving vehicle, without knowing that the designated delivery destination corresponds to a place where parking and stopping of vehicles are prohibited by the road traffic law. In such a case, there is a possibility that when the self-driving vehicle is parked or stopped at the delivery destination, the road traffic law is violated.

### SUMMARY

One non-limiting and exemplary embodiment provides a method for an online delivery system, a management apparatus, and a program which can check whether or not delivery using a self-driving vehicle is possible when a customer designates a package delivery method using the self-driving vehicle.

In one general aspect, the techniques disclosed here feature a method for an online delivery system that includes a management apparatus and a customer terminal for communicating with the management apparatus through a network. The method comprises: receiving, by the management apparatus, delivery destination information regarding a delivery destination of a package, the delivery destination information being transmitted from the customer terminal; accepting designation of a package delivery method using a self-driving vehicle, the designation being transmitted from the customer terminal; determining, based on the delivery destination information, a delivery destination area corresponding to the delivery destination information; deciding, based on the delivery destination area, whether or not parking and stopping of vehicles are prohibited in the delivery destination area; generating first notification information indicating whether or not delivery to the delivery destination indicated by the delivery destination information is possible using the self-driving vehicle, based on a result of the deciding; and transmitting the first notification information to the customer terminal.

The management apparatus according to one aspect of the present disclosure makes it possible to check whether or not delivery using a self-driving vehicle is possible when a customer designates a package delivery method using the self-driving vehicle.

It should be noted that general or specific embodiments may be implemented as a system, a method, an integrated circuit, a computer program, a recording medium such as a computer-readable compact disc read-only memory (CD-ROM), or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

FIG. 1 is a conceptual diagram illustrating an overall configuration of an online delivery system according to a first embodiment;
FIG. 2 is a block diagram illustrating the functional configuration of a management apparatus according to the first embodiment;
FIG. 3 is a diagram illustrating one example of residential-address indication in a block-based address system;
FIG. 4 is a diagram illustrating a first example of a delivery destination area determined based on the scheme of the block-based address system;
FIG. 5 is a diagram illustrating a second example of the delivery destination area determined based on the scheme of the block-based address system;
FIG. 6 is a diagram illustrating a third example of the delivery destination area determined based on the scheme of the block-based address system;
FIG. 7 is a diagram illustrating one example of residential-address indication in a road-based address system;
FIG. 8 is a diagram illustrating one example of a delivery destination area determined based on the scheme of the road-based address system;
FIG. 9 is a diagram illustrating one example of road-map data on which parking-and-stopping-prohibited areas are superimposed;
FIG. 10 is a block diagram illustrating the functional configuration of a customer terminal according to the first embodiment;
FIG. 11 is a flowchart illustrating the flow of processing in the management apparatus according to the first embodiment;
FIG. 12 is a view illustrating one example of a delivery-destination-information entry screen according to the first embodiment;
FIG. 13 is a diagram illustrating one example of road-map data on which the delivery destination area and parking-and-stopping-prohibited areas are superimposed;
FIG. 14 is a view illustrating one example of notification information indicating that delivery to a delivery destination area by using a self-driving vehicle is possible;
FIG. 15 is a view illustrating a first example of notification information indicating that the delivery to the delivery destination area by using the self-driving vehicle is not possible;
FIG. 16 is a view illustrating a second example of the notification information indicating that the delivery to the delivery destination area by using the self-driving vehicle is not possible;
FIG. 17 is a view illustrating a third example of the notification information indicating that the delivery to the delivery destination area by using the self-driving vehicle is not possible;
FIG. 18 is a view illustrating a fourth example of the notification information indicating that the delivery to the delivery destination area by using the self-driving vehicle is not possible;
FIG. 19 is a block diagram illustrating the functional configuration of a management apparatus according to a second embodiment;
FIG. 20 is a flowchart illustrating the flow of processing in the management apparatus according to the second embodiment;
FIG. 21 is a view illustrating one example of the notification information indicating that the delivery to the delivery destination by using the self-driving vehicle is possible with a condition that the self-driving vehicle can only be stopped in the delivery destination area;
FIG. 22 is a block diagram illustrating the functional configuration of a management apparatus according to a third embodiment;
FIG. 23 is a diagram illustrating a first example of a surrounding region of the delivery destination, the surrounding region being determined by a surrounding region determiner;
FIG. 24 is a diagram illustrating a second example of the surrounding region of the delivery destination, the surrounding region being determined by a surrounding region determiner;
FIG. 25 is a flowchart illustrating the flow of processing in the management apparatus according to the third embodiment;
FIG. 26 is a diagram illustrating one example of alternative candidate areas of the delivery destination area;
FIG. 27 is a view illustrating one example of notification information indicating that the delivery to the delivery destination area by using the self-driving vehicle is not possible;
FIG. 28 is a diagram illustrating one example of notification information indicating alternative candidate areas;
FIG. 29 is a diagram illustrating a first modification of the notification information indicating the alternative candidate areas; and
FIG. 30 is a second modification of the notification information indicating the alternative candidate areas.

### DETAILED DESCRIPTION

A method according to one aspect of the present disclosure is directed to a method for an online delivery system that includes a management apparatus and a customer terminal for communicating with the management apparatus through a network. The method comprises: receiving, by the management apparatus, delivery destination information regarding a delivery destination of a package, the delivery destination information being transmitted from the customer terminal; accepting designation of a package delivery method using a self-driving vehicle, the designation being transmitted from the customer terminal; determining, based on the delivery destination information, a delivery destination area corresponding to the delivery destination information; deciding, based on the delivery destination area, whether or not parking and stopping of vehicles are prohibited in the delivery destination area; generating first notification information indicating whether or not delivery to the delivery destination indicated by the delivery destination information is possible using the self-driving vehicle, based on a result of the deciding; and transmitting the first notification information to the customer terminal.

According to this aspect, during designation of the package delivery method, a customer can designate the delivery method after checking whether or not the delivery to the delivery destination by using the self-driving vehicle is possible.

For example, the determining may determine the delivery destination area, based on a scheme of residential-address indication of an address indicated by the delivery destination information.

According to this aspect, since information that the customer enters as the delivery destination information is his or her address in many cases, determining the delivery destination area based on the scheme of the residential-address indication of the address allows a place intended by the customer to be determined as the delivery location using the self-driving vehicle.

For example, the method further may comprise: pre-storing, in a first memory, parking-and-stopping-prohibited area information regarding parking-and-stopping-prohibited areas of the vehicles, and the deciding may decide whether or not parking and stopping of the vehicles are prohibited in the delivery destination area, based on the delivery destination area and the parking-and-stopping-prohibited area information.

According to this aspect, the decision can be easily made as to whether or not parking and stopping of the vehicles are prohibited in the delivery destination area.

For example, the deciding may decide whether or not parking and stopping of the vehicles are prohibited in the delivery destination area, based on whether or not at least part of the delivery destination area includes a parking-and-stopping-prohibited area.

According to this aspect, only when parking-and-stopping-prohibited area is not included in the delivery destination area, it is decided that parking and stopping of the self-driving vehicle are not prohibited in the delivery destination area. This make it possible to prevent the road traffic law from being violated even when the self-driving vehicle is parked or stopped in any place in the delivery destination area. Also, since the decision is made only based on whether or not the delivery destination area and the parking-and-stopping-prohibited areas have an overlapping portion, the decision can be made with a simple configuration.

For example, the method may further comprise: generating second notification information indicating the delivery destination area and the parking-and-stopping-prohibited areas, when the first notification information indicating that the delivery to the delivery destination by using the self-driving vehicle is not possible; and transmitting the second notification information to the customer terminal.

According to this aspect, the customer can specifically recognize the relationship between the delivery destination area and the parking-and-stopping-prohibited areas.

For example, the parking-and-stopping-prohibited area information may include dynamic parking-and-stopping-prohibited area information regarding a dynamic parking-and-stopping-prohibited area where parking and stopping of the vehicles are prohibited in at least one of a particular time slot and a particular day of a week, and static parking-and-stopping-prohibited area information regarding a static parking-and-stopping-prohibited area where parking and stopping of the vehicles are prohibited at all times, When the deciding decides that parking and stopping of the vehicles are prohibited in the delivery destination area, based on the delivery destination area and the dynamic parking-and-stopping-prohibited area information, the generating may generate the first notification information indicating that the delivery to the delivery destination by using the self-driving vehicle is not possible in a particular period indicated by information of the particular time slot and the particular day of the week is generated, the information being stored in association with the dynamic parking-and-stopping-prohibited area information, and indicating that the delivery to the delivery destination by using the self-driving vehicle is possible in a period other than the particular period.

According to this aspect, the customer can designate the delivery method using the self-driving vehicle, after recognizing the time slot or the date and time when the delivery using the self-driving vehicle is possible.

For example, the method may further comprise: pre-storing, in a second storage, parking-prohibited area information regarding parking-prohibited areas of the vehicles; and deciding whether or not parking of the vehicles is prohibited in the delivery destination area based on the delivery destination area and the parking-prohibited area information, when the deciding decides that parking and stopping of the vehicles are not prohibited in the delivery destination area. The generating may generate the first notification information indicating that the delivery to the delivery destination by using the self-driving vehicle is possible with a condition that only stopping of the self-driving vehicle in the delivery destination area is possible, when it is decided that parking and stopping of the vehicles are not prohibited in the delivery destination area and it is decided that parking of the vehicles is provided in the delivery destination area.

According to this aspect, the customer can be notified of information indicating that the delivery to the delivery destination designated by the customer is possible using the self-driving vehicle, but parking of the self-driving vehicle is prohibited in the delivery destination, and only stopping is possible. Thus, the customer can designate the delivery method by taking the information into account.

For example, the method may further comprise: generating second notification information indicating a pre-defined stopping-permitted period of the self-driving vehicle, when the first notification information indicating that the delivery to the delivery destination area by using the self-driving vehicle is possible with the condition that only stopping of the self-driving vehicle in the delivery destination area is possible is generated; and transmitting the second notification information to the customer terminal.

According to this aspect, when only stopping of the self-driving vehicle is possible during the delivery using the self-driving vehicle, the customer can recognize how long the stopping-permitted period is and thus can designate the delivery method by taking the information into account.

For example, the method may further comprise: determining a surrounding region of the delivery destination based on the delivery destination information, when it is decided that parking and stopping of the vehicles are prohibited in the delivery destination area; locating an alternative candidate area of the delivery destination area, the alternative candidate area being an area where parking and stopping of the vehicles are not prohibited in the determined surrounding region, based on the surrounding region and the parking-and-stopping-prohibited area information; generating second notification information indicating the located alternative candidate area; and transmitting the second notification information to the customer terminal.

According to this aspect, since the alternative candidate area of the delivery destination area in the surrounding region of the delivery destination is presented to the customer, the customer can designate the delivery method by taking the alternative candidate area into account.

For example, the method may further comprise: generating third notification information indicating history of the alternative candidate area, when the second notification information is generated; and transmitting the third notification information to the customer terminal.

According to this aspect, a customer who has designated the same delivery destination in the past can recognize which place was selected as the alternative candidate area. Thus, when there is a plurality of alternative candidate areas, the customer can designate the alternative candidate area by taking the third notification information into account.

For example, the method may further comprise: changing the surrounding region of the delivery destination based on the delivery destination information, when the alternative candidate area is not successfully located; and locating another alternative candidate area of the delivery destination area, the other alternative candidate area being an area where parking and stopping of the vehicles are not prohibited in the changed surrounding region.

According to this aspect, the alternative candidate area that is the closest to the delivery destination can be presented to the customer, regardless of the distance to the delivery destination. When the customer desires only the delivery method using the self-driving vehicle, the alternative candidate area that is the closest to the delivery destination is useful information for the customer, regardless of the distance to the delivery destination.

For example, the method may further include: generating second notification information indicating a position where the self-driving vehicle is to be parked or stopped in the delivery destination area when the first notification information indicating that the delivery to the delivery destination is possible using the self-driving vehicle, is generated; and transmitting the second notification information to the customer terminal.

According to this aspect, the customer can recognize the position where the self-driving vehicle is to be parked or stopped, when he or she designates the delivery method using the self-driving vehicle.

For example, the method may further include: generating second notification information indicating a delivery-method designation screen for designating the package delivery method, the delivery-method designation screen being set so that the package delivery method using the self-driving vehicle is not selectable when the first notification, information indicating that the delivery to the delivery destination is not possible using the self-driving vehicle, is generated; and transmitting the second notification information to the customer terminal.

According to this aspect, it is possible to prevent the customer from erroneously selecting the delivery method using the self-driving vehicle.

For example, the method may further comprise: generating second notification information indicating that accepting designation of the package delivery method using the self-driving vehicle is disabled, when the first notification information, indicating that the delivery to the delivery destination is not possible using the self-driving vehicle, is generated; and transmitting the second notification information to the customer terminal.

According to this aspect, it is possible to prevent an instruction for the delivery using the self-driving vehicle from being permitted even when the delivery using the self-driving vehicle is not possible.

For example, the method may further comprise: generating second notification information indicating a reason why the delivery to the delivery destination is not possible using the self-driving vehicle, when the first notification information, indicating that the delivery to the delivery destination is not possible using the self-driving vehicle, is generated; and transmitting the second notification information to the customer terminal.

According to this aspect, it is possible to know the reason why the delivery using the self-driving vehicle is not possible, and thus the customer does not have to inquire whether or not the delivery using the self-driving vehicle is possible, each time he or she designates the delivery method.

For example, the method may further comprise: storing, in a memory, road traffic laws that define at least parking-prohibited areas, wherein the deciding decides whether or not parking and stopping of the vehicles are prohibited in the delivery destination area, based on the delivery destination area and the road traffic laws.

For example, the method may further comprise: obtaining, from an external institution, information regarding locations of specific activities or specific facilities, wherein the deciding decides whether or not parking and stopping of the vehicles are prohibited in the delivery destination area, based on the delivery destination area and the information regarding the locations of the specific activities or the specific facilities.

A management apparatus according to one aspect of the present disclosure is used in an online delivery system and that communicates with a customer terminal through a network. The management apparatus comprises: a receiver that receives delivery destination information regarding a delivery destination of a package, the delivery destination information being transmitted from the customer terminal; an accepter that accepts designation of a package delivery method using a self-driving vehicle, the designation being transmitted from the customer terminal; a determiner that determines, based on the delivery destination information, a delivery destination area corresponding to the delivery destination information; a decider that decides, based on the delivery destination area, whether or not parking and stopping of vehicles are prohibited in the delivery destination area; a generator that generates first notification information indicating whether or not delivery to the delivery destination indicated by the delivery destination information is possible using the self-driving vehicle, based on a result of the decision of the decider as to whether or not parking and stopping of the vehicles are prohibited in the delivery destination area; and a transmitter that transmits the first notification information to the customer terminal.

According to this aspect, during designation of the package delivery method, the customer can designate the delivery method after checking whether or not the delivery to the delivery destination by using the self-driving vehicle is possible.

A computer-readable non-transitory recording medium according to one aspect of the present disclosure has stored therein a program for controlling a management apparatus that is used in an online delivery system and that communicates with a customer terminal through a network. The program causes, when executed by a computer included in the management apparatus, execution of operations comprising: receiving delivery destination information regarding a delivery destination of a package, the delivery destination information being transmitted from the customer terminal; accepting designation of a package delivery method using a self-driving vehicle, the designation being transmitted from the customer terminal; determining, based on the delivery destination information, a delivery destination area corresponding to the delivery destination information; deciding, based on the delivery destination area, whether or not parking and stopping of vehicles are prohibited in the delivery destination area; generating first notification information indicating whether or not delivery to the delivery destination indicated by the delivery destination information is possible using the self-driving vehicle, based on a result of the deciding as to whether or not parking and stopping of the vehicles are prohibited in the delivery destination area; and transmitting the first notification information to the customer terminal.

According to this aspect, during designation of the package delivery method, the customer can designate the delivery method after checking whether or not the delivery to the delivery destination by using the self-driving vehicle is possible.

A management apparatus according to one aspect of the present disclosure is used in an online delivery system and that communicates with a customer terminal through a network. The management apparatus comprises: processing circuitry; and a memory including at least one set of instructions that, when executed by the processing circuitry, causes the processing circuitry to perform operations including: receiving delivery destination information regarding a delivery destination of a package, the delivery destination information being transmitted from the customer terminal; accepting designation of a package delivery method using a self-driving vehicle, the designation being transmitted from the customer terminal; determining, based on the delivery destination information, a delivery destination area corresponding to the delivery destination information; deciding, based on the delivery destination area, whether or not parking and stopping of vehicles are prohibited in the delivery destination area; generating first notification information indicating whether or not delivery to the delivery destination indicated by the delivery destination information is possible using the self-driving vehicle, based on a result of the deciding as to whether or not parking and stopping of the vehicles are prohibited in the delivery destination area; and transmitting the first notification information to the customer terminal.

It should be noted that general or specific embodiments may be implemented as a system, a method, an integrated circuit, a computer program, a recording medium such as a computer-readable CD-ROM, or any selective combination thereof.

Embodiments will be described below in detail with reference to the accompanying drawings.

The embodiments described below each represent a general or specific example. Numerical values, shapes, materials, constituent elements, the arrangement positions and connections of constituent elements, steps, the order of steps, and so on described in the embodiment below are examples and are not intended to limit the present disclosure. Of the constituent elements in the embodiment described below, the constituent elements not set forth in the independent claims that represent the broadest concept will be described as optional constituent elements.

### (First Embodiment)

### [1-1. Overall Configuration of Online Delivery System]

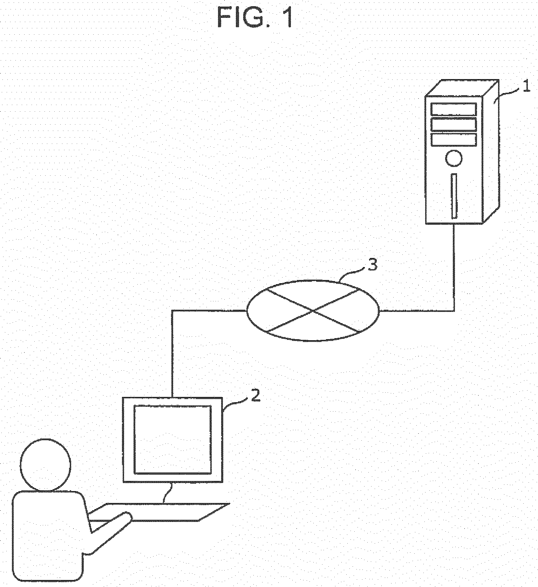

First, an overall configuration of an online delivery system according to a first embodiment will be described with reference to FIG. 1. FIG. 1 is a conceptual diagram illustrating an overall configuration of the online delivery system according to the first embodiment.

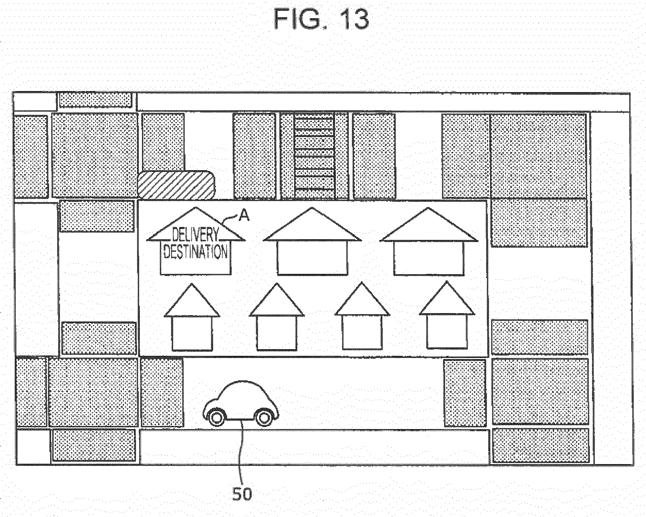

The online delivery system according to the first embodiment is a system that accepts designation of a product (package) delivery method using a self-driving vehicle 50 (described below and illustrated in FIG. 13), for example, in online shopping. The self-driving vehicle 50 is a vehicle that travels automatically in an unmanned manner by using a drive program and has one or more lockers or the like for storing a plurality of packages.

As illustrated in FIG. 1, the online delivery system includes a management apparatus 1 at a service provider and a customer terminal 2 at a customer side which communicates with the management apparatus 1 through an Internet 3 (one example of a network).

In the present embodiment, a description will be given of an example in which, when the customer designates a package delivery method by using the customer terminal 2 in online shopping, he or she designates a package delivery method using a self-driving vehicle as one option of the delivery method.

The management apparatus 1 is a server placed, for example, at the service provider side. The service provider is, for example, a business operator that sells products in online shopping. The management apparatus 1 receives a product order from the customer terminal 2 at the customer side and accepts designation of a delivery method for the ordered product. Also, when the product delivery method is determined, the management apparatus 1 transmits information regarding the determined delivery method to a delivery management apparatus (not illustrated) of a delivery company through the Internet 3. Based on information regarding the delivery method which is transmitted from the management apparatus 1, the delivery management apparatus executes delivery processing, such as operation scheduling of a delivery vehicle. Although, in the present embodiment, a case in which the management apparatus 1 at the service provider side and the delivery management apparatus of the delivery company are independently provided, the present disclosure is not limited thereto, and when the service provider also performs delivery work, the delivery management apparatus may be provided in the same system as in the management apparatus 1.

The customer terminal 2 is, for example, a personal computer, a smartphone, or a tablet terminal that is operated by the customer. The customer terminal 2 is equipment having a function for displaying information to the customer, a function for receiving an input operation performed by the customer, and a function for communicating with the management apparatus 1. By using the customer terminal 2 to access the management apparatus 1 through the Internet 3, for example, the customer orders a product and designates a delivery method for the ordered product. Possible methods for the customer terminal 2 to access the management apparatus 1 include a method in which the customer terminal 2 accesses a web server of the management apparatus 1 through a web page and a method in which the customer terminal 2 accesses the management apparatus 1 through a dedicated application included in the customer terminal 2.

The Internet 3 is a network for realizing communication between the management apparatus 1 and the customer terminal 2. Although the description in the present embodiment is given in conjunction with an example in which communication between the management apparatus 1 and the customer terminal 2 is realized using the Internet 3, the present disclosure is not limited thereto, and for example, the communication may be realized using another communication medium, such as a dedicated communication channel.

The configurations of the management apparatus 1 and the customer terminal 2 will be described below in detail.

### [1-2. Functional Configuration of Management Apparatus]

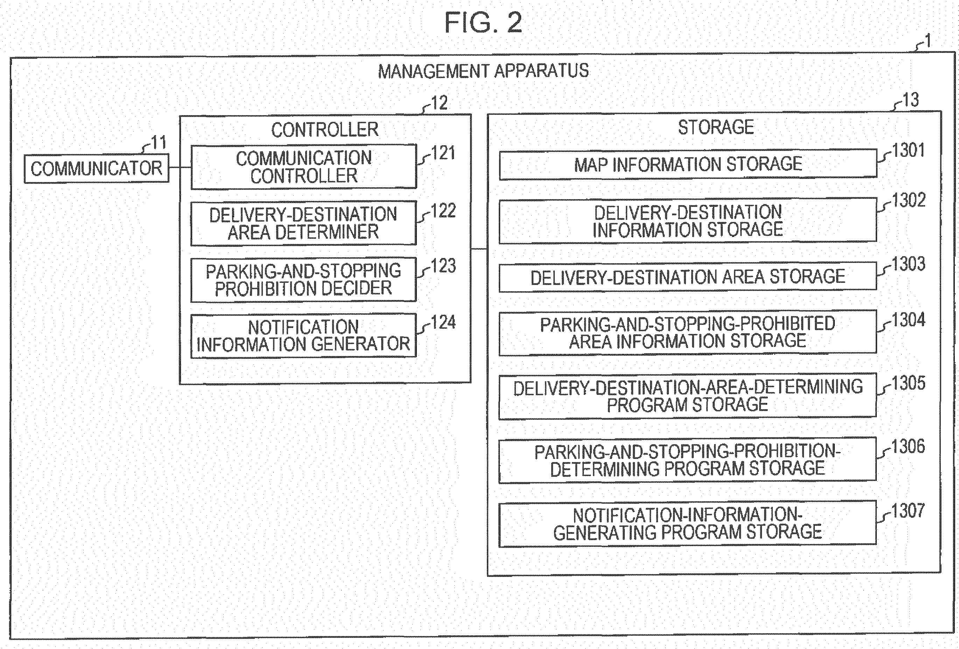

Next, the functional configuration of the management apparatus 1 will be described with reference to FIG. 2. FIG. 2 is a block diagram illustrating the functional configuration of the management apparatus 1 according to the first embodiment.

As illustrated in FIG. 2, the management apparatus 1 includes a communicator 11, a controller 12, and a storage 13.

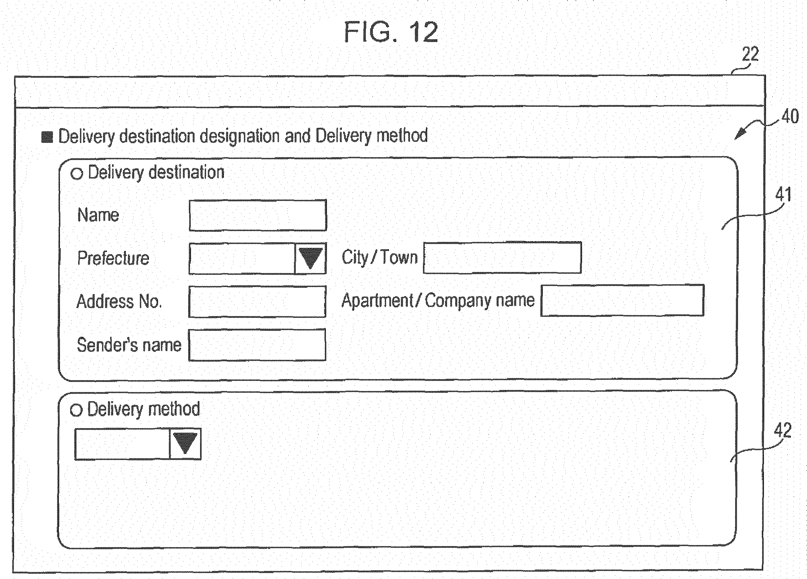

The communicator 11 serves to transmit/receive information to/from, for example, an external apparatus, such as the customer terminal 2, through a local area network (LAN) or a wide area network (WAN). Specifically, for example, the communicator 11 transmits a delivery-destination-information entry screen 40 (which is one example of a delivery-method designation screen and is described below and illustrated in FIG. 12) and notification information to the customer terminal 2 and receives, from the customer terminal 2, delivery destination information and information of a designated delivery method. The delivery destination information is information regarding a package delivery destination.

The controller 12 is, for example, implemented by a central processing unit (CPU). The controller 12 includes a communication controller 121 (one example of a transmitter and a receiver), a delivery-destination area determiner 122, a parking-and-stopping prohibition decider 123, and a notification information generator 124.

The communication controller 121 controls the communicator 11 to transmit, for example, the delivery-destination-information entry screen 40 and notification information for the customer to the customer terminal 2 and receives, from the customer terminal 2, delivery destination information and information of a designated delivery method.

The delivery-destination area determiner 122 operates based on a delivery-destination area determination program stored in a delivery-destination-area-determining program storage 1305 (described below). Specifically, based on the delivery destination information received from the customer terminal 2, the delivery-destination area determiner 122 determines a delivery destination area associated with the delivery destination information. The delivery-destination area determined by the delivery-destination area determiner 122 is used to decide whether or not the delivery using the self-driving vehicle 50 is possible, as described below.

Now, a detailed description will be given of a method for determining a delivery destination area. The delivery destination information that the customer, who is a recipient of a package, enters by using the customer terminal 2 is, in many cases, an address of the customer, and this address indicates a position that the front door of a building or a main doorway of a building faces and is not meant to indicate an area. Thus, it is unclear that which area when the self-driving vehicle is parked or stopped therein is regarded as an area where it is parked or stopped at the position indicated by the address. Accordingly, the delivery-destination area determiner 122 performs processing for determining, as a delivery destination area, a parking-and-stopping area of the self-driving vehicle 50 which corresponds to the position indicated by the address. This processing makes it possible to clarify that which area is an area where the self-driving vehicle 50 is regarded as being parked or stopped at the position indicated by the address.

One possible method for determining the delivery destination area is a method for determining the delivery destination area on the basis of the scheme of residential-address indication of the address indicated by the delivery destination information. A block-based address system and a road-based address system are available as the scheme of the residential-address indication. First, a description will be given of a case in which a delivery destination area is determined based on the scheme of the block-based address system, which is commonly employed in Japan.

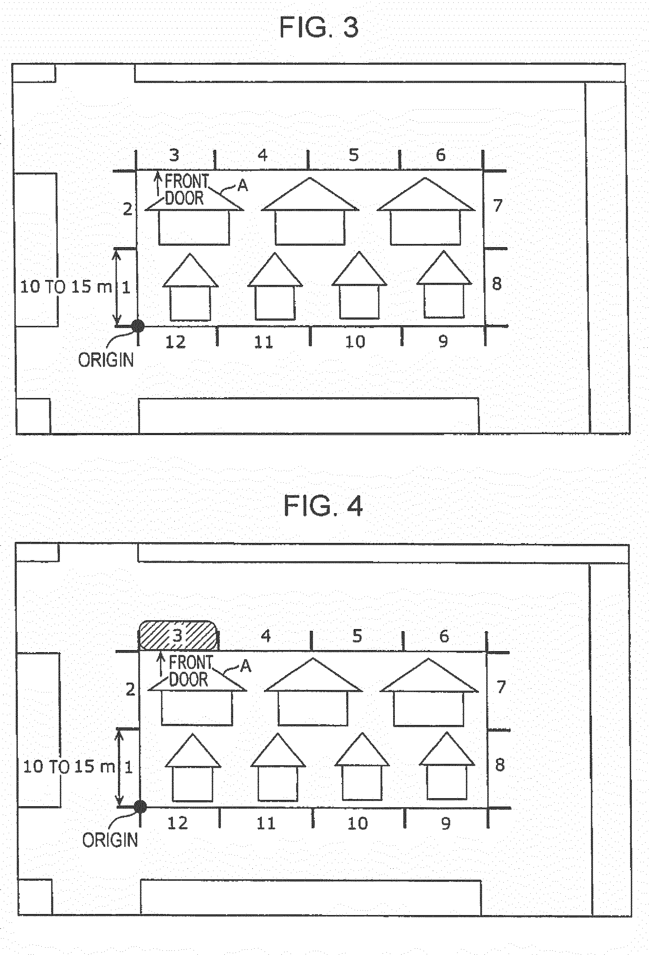

Now, one example of the residential-address indication in the block-based address system will be described with reference to FIG. 3. FIG. 3 is a diagram illustrating one example of residential-address indication in the block-based address system. As illustrated in FIG. 3, in the block-based address system, a corner of the surrounding of each block which is the closest to a municipal center (e.g., a municipal office) is designated as an origin, distances are measured clockwise from the origin, the surrounding of the block is sectioned at intervals of 10 to 15 m, and basic numbers, such as "1", "2", "3", ..., "12", are assigned thereto. For example, in the case of residential-address indication "..., 1-chome, 2-ban, 3-gou", the part "2" corresponds to a number indicating a block, and the part "3" corresponds to the basic number. The residential-address indication in the block-based address system is expressed by a basic number at a position that the front door of a building or a major doorway of a building faces. In the example illustrated in FIG. 3, the residential-address indication of building A is "3", which is a basic number at a position that the front door of building A faces.

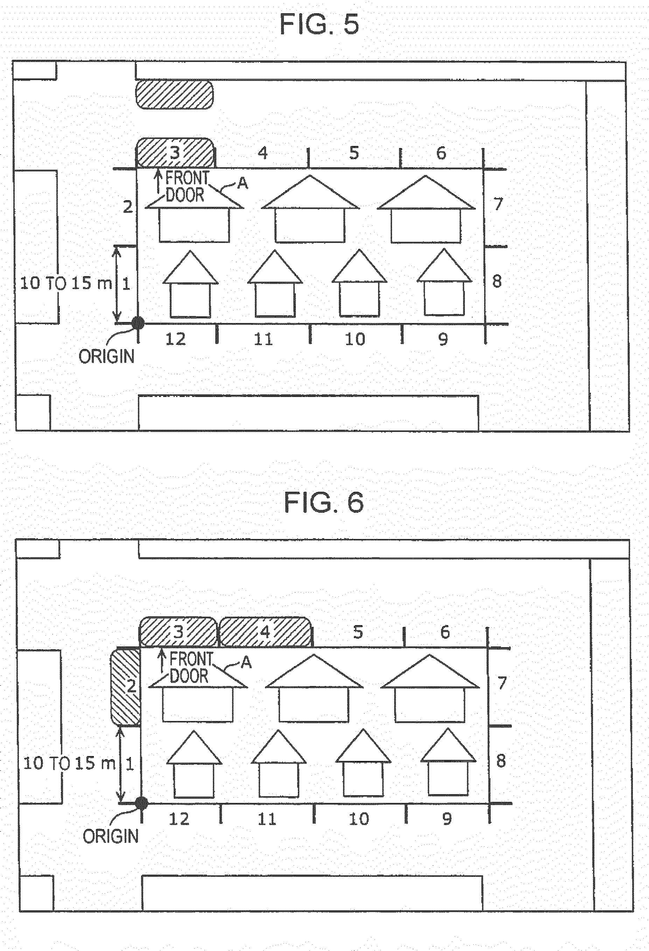

Now, a method for determining a delivery destination area on the basis of the scheme of the above-described block-based address system will be described with reference to FIGS. 4 to 6. FIGS. 4 to 6 respectively illustrate first to third examples of a delivery destination area determined based on the scheme of the block-based address system. In the example illustrated in FIG. 4, it is determined that the delivery destination area of building A is a region (indicated by diagonal lines) that is on a road facing the position indicated by residential-address indication "3" of building A and within a predetermined distance (e.g., 2 m) from an edge portion of the road. Also, in an example as illustrated in FIG. 5, the delivery destination area of building A may also include a region (indicated by diagonal lines) including an opposing lane on the road facing the position indicated by the residential-address indication "3" of building A. In addition, as in the example illustrated in FIG. 6, the delivery destination area of building A may include regions that are on the road facing positions indicated by residential-address indications "2" and "4" adjacent to two opposing ends of the residential-address indication "3" of building A and that are within a predetermined distance (e.g., 2 m) from the edge portion of the road.

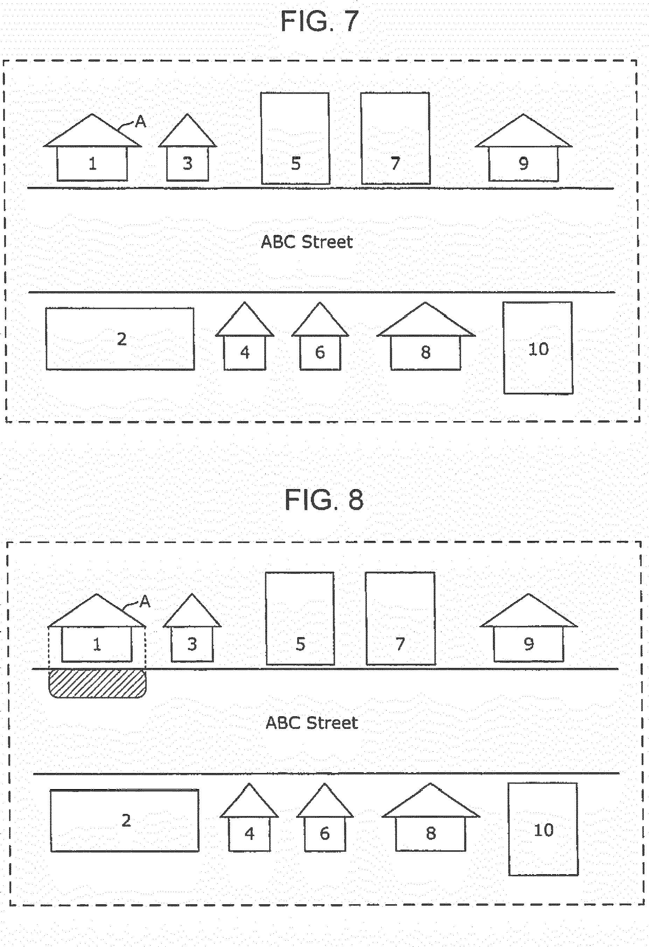

Next, a description will be given of a case in which a delivery destination area is determined based on the scheme of the road-based address system, which is commonly employed in countries other than Japan. Now, one example of residential-address indication in the road-based address system will be described with reference to FIG. 7. FIG. 7 is a diagram illustrating one example of residential-address indication in the road-based address system. As illustrated in FIG. 7, in the road-based address system, name "ABC Street" is assigned to a road, and residential-address numbers "1", "2", "3", ..., and "10" are assigned to buildings facing the road or having roads leading to the road. Each residential-address indication in the road-based address system is expressed by the name of a road and a residential-address number assigned to a building. In the example illustrated in FIG. 7, odd residential-address numbers are assigned to buildings at one side of the road "ABC Street" and even residential-address numbers are assigned to buildings at the other side of the road. Although how the residential-address numbers are assigned differs depending on the country or region, the schemes of indicating a residence by using the name of a road and the residential-address number assigned to a building are the same.

Now, a method for determining a delivery destination area on the basis of the above-described scheme of the road-based address system will be described with reference to FIG. 8. FIG. 8 is a diagram illustrating one example of a delivery destination area determined based on the scheme of the road-based address system. In the example illustrated in FIG. 8, the delivery destination area of building A is determined to be a region (indicated by diagonal lines) that is on a road facing building A indicated by residential-address indication "1" and that is a predetermined distance away from an edge portion of the road. When this method is used, although it is necessary to identify which portion of the building faces the road, this information can be determined using building information and road information included in map information. This method can be used not only in the road-based address system but also in a case in which a building can be located in the block-based address system.

Although a method for determining a delivery destination area on the basis of the residential-address indication scheme has been described above, any method for determining a delivery destination area on the basis of delivery destination information may be used. For example, an administrator or the like may pre-set delivery destination areas for respective pieces of delivery destination information, and a delivery destination area may be determined based on the pre-set information.

Upon receiving the delivery destination information transmitted from the customer terminal 2, the delivery-destination area determiner 122 may determine a delivery destination area based on any of the methods described above. Alternatively, information in which addresses and delivery destination areas are associated with each other may be pre-stored in a database. In this case, upon receiving the delivery destination information transmitted from the customer terminal 2, the delivery-destination area determiner 122 retrieves, from the database, the delivery destination area corresponding to the delivery destination information to thereby determine the delivery destination area.

Referring back to FIG. 2, the parking-and-stopping prohibition decider 123 operates based on a parking-and-stopping-prohibition-determining program stored in a parking-and-stopping-prohibition-determining program storage 1306 (described below). Specifically, on the basis of parking-and-stopping-prohibited area information stored in a parking-and-stopping-prohibited area information storage 1304 (which is one example of a first storage and is described below) and the delivery-destination area determined by the delivery-destination area determiner 122, the parking-and-stopping prohibition decider 123 decides whether or not parking and stopping of vehicles (including the self-driving vehicle 50) are prohibited in the delivery destination area.

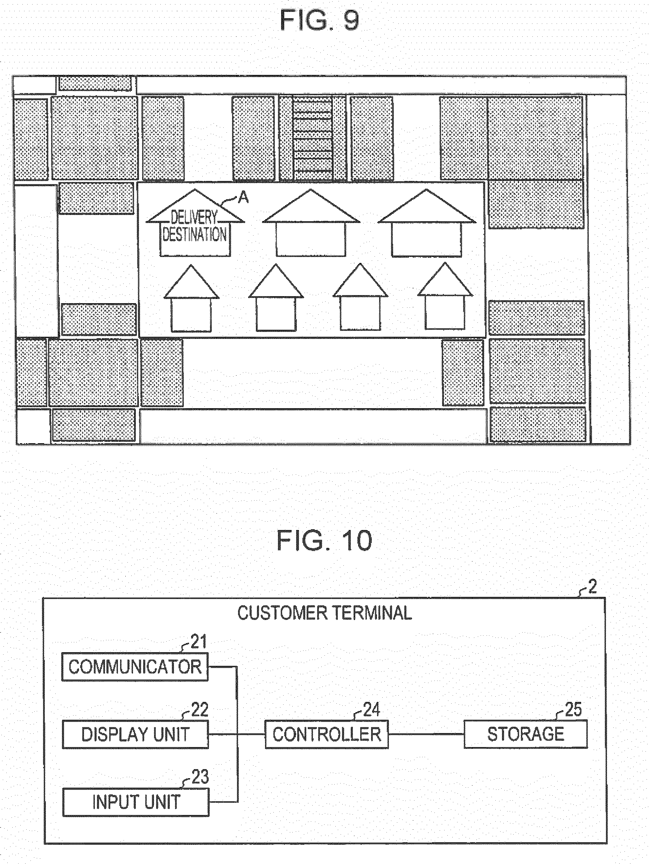

The notification information generator 124 operates based on a notification-information-generating program stored in a notification-information-generating program storage 1307 (described below). More specifically, on the basis of a result of the decision made by the parking-and-stopping prohibition decider 123, the notification information generator 124 generates notification information (one example of first notification information) indicating whether or not the self-driving vehicle 50 can deliver to the delivery destination indicated by the delivery destination information. Herein, generating the notification information includes processing for generating a display screen for display to the customer terminal 2. For example, a plurality of templates of the display screen for display to the customer terminal 2 is pre-stored, and the notification information generator 124 generates the display screen by selecting an arbitrary template from the templates of the display screen on the basis of the result of the decision made by the parking-and-stopping prohibition decider 123. In the case of a configuration in which the customer terminal 2 generates a display screen corresponding to a display unit 22 (described below and illustrated in FIG. 10), the notification information generator 124 may generate, as the notification information, information necessary for generating the display screen, for example, information regarding whether or not the self-driving vehicle 50 can deliver to the delivery destination). The communicator 11 transmits the notification information generated by the notification information generator 124 to the customer terminal 2 through the Internet 3.

The storage 13 is implemented by, for example, a semiconductor memory. As illustrated in FIG. 2, the storage 13 includes a map information storage 1301, a delivery-destination information storage 1302, a delivery-destination area storage 1303, the parking-and-stopping-prohibited area information storage 1304, the delivery-destination-area-determining program storage 1305, the parking-and-stopping-prohibition-determining program storage 1306, and the notification-information-generating program storage 1307.

The map information storage 1301 stores therein road-map data for a road map. The road-map data can be obtained from, for example, an external server or the like that provides road-map data. The road-map data is used, for example, in order to locate a delivery destination area and parking-and-stopping-prohibited areas.

It is desirable that the road-map data stored in the map information storage 1301 be the latest data. To this end, for example, by periodically accessing an external server or the like, the management apparatus 1 may receive the latest road-map data or data updated from the previously obtained road-map data to thereby update the road-map data. Also, upon updating the road-map data, the management apparatus 1 may update the parking-and-stopping-prohibited area information. This allows the parking-and-stopping prohibition decider 123 to decide whether or not the delivery to the delivery destination area by using the self-driving vehicle 50 is possible, on the basis of the latest parking-and-stopping-prohibited area information.

The delivery-destination information storage 1302 stores therein the delivery destination information received from the customer terminal 2.

Based on the delivery destination information received from the customer terminal 2, the delivery-destination area storage 1303 stores the delivery-destination area determined by the delivery-destination area determiner 122.

The parking-and-stopping-prohibited area information storage 1304 stores the parking-and-stopping-prohibited area information therein. The parking-and-stopping-prohibited area information is, for example, data obtained by superimposing, on the road-map data, parking-and-stopping-prohibited areas that are determined based on the regulations in article 44 of the road traffic law and in which parking and stopping of vehicles are prohibited.

For example, on the basis of the regulation "3. Portions within 5 meters frontward from the front side end of a crosswalk or a bicycle crossing zone and rearward from the rear side end thereof in article 44 of the road traffic law, the parking-and-stopping-prohibited area information can be generated by extracting crosswalks and bicycle crossing zones from the road-map data stored in the map information storage 1301 and superimposing, on the road-map data, the regions of portions within 5 meters frontward from the front side end of each of the extracted crosswalks and bicycle crossing zones and rearward from the rear side end thereof.

Now, one example of the parking-and-stopping-prohibited area information will be described with reference to FIG. 9. FIG. 9 is a diagram illustrating one example of road-map data on which parking-and-stopping-prohibited areas are superimposed. In FIG. 9, parking-and-stopping-prohibited areas determined by the regulations in the article 44 of the road traffic law are denoted by regions indicated by dots. In the example illustrated in FIG. 9, a) intersections, b) a crosswalk, c) portions within 5 meters from the side ends of each intersection, and d) portions within 5 meters frontward from the front side end of the crosswalk and rearward from the rear side end thereof are designated as parking-and-stopping-prohibited areas.

The parking-and-stopping-prohibited area information may be data automatically generated using a dedicated program or may be data manually generated by an administrator or the like. Alternatively, the parking-and-stopping-prohibited area information may be data generated by combining the automatically generated data and the manually generated data. Also, when an external server or the like that provides the parking-and-stopping-prohibited area information exists, all or part of the parking-and-stopping-prohibited area information may be obtained from the external server or the like.

The delivery-destination-area-determining program storage 1305 stores therein the delivery-destination area determination program to be executed by the delivery-destination area determiner 122.

The parking-and-stopping-prohibition-determining program storage 1306 stores therein the parking-and-stopping-prohibition-determining program to be executed by the parking-and-stopping prohibition decider 123.

The notification-information-generating program storage 1307 stores therein the notification-information-generating program to be executed by the notification information generator 124.

### [1-3. Functional Configuration of Customer Terminal]

Next, the functional configuration of the customer terminal 2 will be described with reference to FIG. 10. FIG. 10 is a block diagram illustrating the functional configuration of the customer terminal 2 according to the first embodiment.

As illustrated in FIG. 10, the customer terminal 2 includes a communicator 21, the display unit 22, an input unit 23, a controller 24, and a storage 25.

The communicator 21 serves to transmit/receive information to/from an external apparatus, such as the management apparatus 1, for e example, through a LAN or WAN. More specifically, the communicator 11 receives, for example, the delivery-destination-information entry screen 40 and notification information from the management apparatus 1 and transmits, to the management apparatus 1, delivery destination information and information of a designated delivery method.

The display unit 22 is implemented by, for example, a, liquid-crystal display or the like. The display unit 22 displays the delivery-destination-information entry screen 40 and notification information received from the management apparatus 1 and the delivery destination information or the like that the customer entered by using the input unit 23.

The input unit 23 includes, for example, a keyboard, a mouse, and so on. The customer can enter, for example, the delivery destination information by using the input unit 23. The input unit 23 may be integrally configured with a display unit. One example of such a configuration is a touch panel of a smartphone.

The controller 24 is implemented by, for example, a CPU and performs processing for controlling the customer terminal 2.

The storage 25 is implemented by, for example, a semiconductor memory and stores therein information received from the management apparatus 1, information entered via the input unit 23, and so on.

### [1-4. Flow of Processing in Management Apparatus]

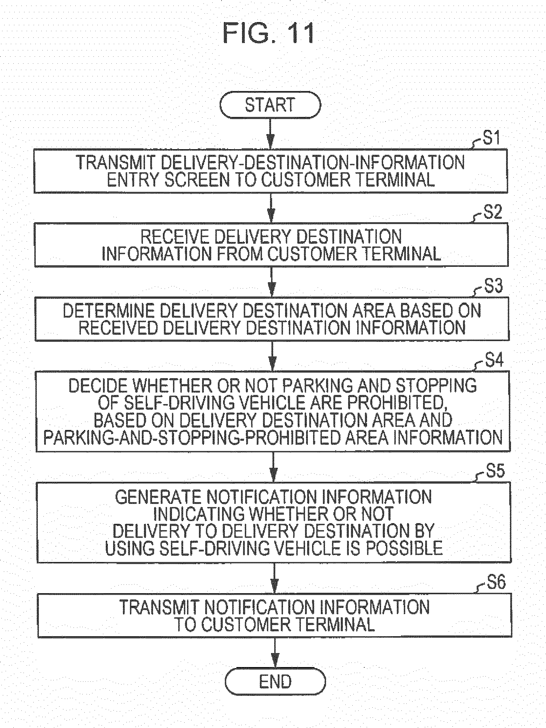

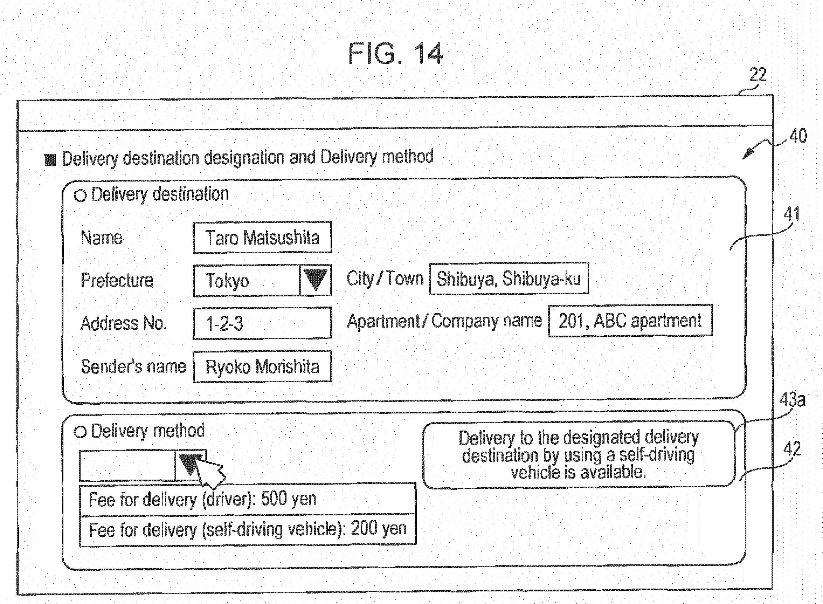

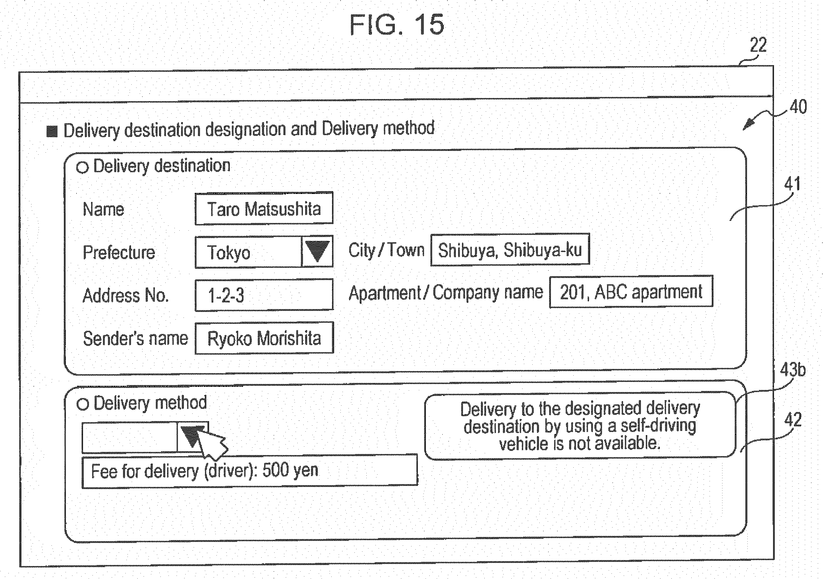

Next, a flow (a method for an online delivery system) of processing in the management apparatus 1 when the customer designates a package delivery method, for example, in online shopping will be described with reference to FIGS. 11 to 18. FIG. 11 is a flowchart illustrating the flow of processing in the management apparatus 1 according to the first embodiment. FIG. 12 is a view illustrating one example of the delivery-destination-information entry screen 40 according to the first embodiment. FIG. 13 is a diagram illustrating one example of road-map data on which the delivery destination area and parking-and-stopping-prohibited areas are superimposed. FIG. 14 is a view illustrating one example of notification information indicating that delivery to a delivery destination area by using the self-driving vehicle 50 is possible. FIGS. 15 to 18 are views of first to fourth examples of notification information indicating that the delivery to the delivery destination area by using the self-driving vehicle 50 is not possible.

As illustrated in FIG. 11, first, the management apparatus 1 transmits a delivery-destination-information entry screen to the customer terminal 2 (S1). This transmission process may be executed, for example, when a request for transmitting the delivery-destination-information entry screen is received from the customer terminal 2 or may be executed as one process of a series of purchasing processes performed when the customer purchases a product by using the customer terminal 2 in online shopping. When the customer terminal 2 designates a delivery method by using a dedicated application, the delivery-destination-information entry screen does not necessarily have to be transmitted from the management apparatus 1 to the customer terminal 2, and for example, the delivery destination entry screen may be displayed on the display unit 22 of the customer terminal 2 on the basis of processing performed by the dedicated application.

Upon receiving the delivery-destination-information entry screen from the management apparatus 1, the customer terminal 2 displays the delivery-destination-information entry screen 40 on the display unit 22, as illustrated in FIG. 12. Although, in the example illustrated in FIG. 12, the delivery-destination-information entry screen 40 is constituted by an input area 41 for entering delivery destination information and an input area 42 for designating the delivery method, the input area 41 and the input area 42 may be displayed on independent screens.

As illustrated in FIG. 14, when the customer enters delivery destination information to the input area 41 on the delivery-destination-information entry screen 40 by using the input unit 23, the customer terminal 2 transmits the delivery destination information to the management apparatus 1. The delivery destination information transmitted from the customer terminal 2 includes information about the name and the address of a recipient and so on. The timing at which it is determined that the entry of the delivery destination information is completed may be an arbitrary timing. For example, as illustrated in FIG. 14, when the customer clicks the "drop-down arrow" button in an option entry field in "Delivery method" in the input area 42 on the delivery-destination-information entry screen 40, it is checked whether or not all fields in "Delivery destination" in the input area 41 are entered, and when all the fields are entered, it may be determined that the entry of the delivery destination information is completed. Alternatively, for example, through periodical checking as to whether or not all fields in "Delivery destination" in the input area 41 are entered, it may be determined that the entry of the delivery destination information is completed. Additionally, for example, a notification button for notifying the management apparatus 1 that the entry of the delivery destination information is completed may be displayed on the delivery-destination-information entry screen 40, and when the customer completes entering the delivery destination information, he or she may click on the notification button.

After the communicator 11 in the management apparatus 1 receives the delivery destination information transmitted from the customer terminal 2 (S2), the delivery-destination area determiner 122 determines a delivery destination area based on the address included in the received delivery destination information (S3). Specifically, the delivery-destination area determiner 122 determines the delivery destination area based on the above-described scheme of the block-based address system. In the example illustrated in FIG. 4, building A is at an address designated by the delivery destination information, and a delivery destination area determined based on the delivery destination information is a region denoted by diagonal lines.

After the delivery-destination area determiner 122 determines the delivery destination area in step S3, the parking-and-stopping prohibition decider 123 decides whether or not parking and stopping of the self-driving vehicle 50 are prohibited in the delivery destination area, based on the determined delivery destination area and the parking-and-stopping-prohibited area information stored in the parking-and-stopping-prohibited area information storage 1304 (S4). More specifically, as illustrated in FIG. 13, the delivery destination area and the parking-and-stopping-prohibited areas are superimposed on the road-map data stored in the map information storage 1301, and the parking-and-stopping prohibition decider 123 decides whether or not parking and stopping of the self-driving vehicle 50 are prohibited, based on the relationship between the delivery destination area and the parking-and-stopping-prohibited areas. In FIG. 13, the region denoted by diagonal lines represents a delivery destination area, and regions denoted by dots represent parking-and-stopping-prohibited areas.

The parking-and-stopping prohibition decider 123 decides whether or not parking and stopping of the self-driving vehicle 50 are prohibited in the delivery destination area, for example, based on whether or not a portion where the delivery destination area and any of the parking-and-stopping-prohibited areas overlap each other exists. In the example illustrated in FIG. 13, since the delivery destination area and the parking-and-stopping-prohibited area overlap each other, the parking-and-stopping prohibition decider 123 decides that parking and stopping of the self-driving vehicle 50 are prohibited in the delivery destination area. Hence, only when the delivery destination area and the parking-and-stopping-prohibited area do not overlap each other (i.e., only when a parking-and-stopping-prohibited area is not included in the delivery destination area), the parking-and-stopping prohibition decider 123 decides that parking and stopping of the self-driving vehicle 50 are not prohibited in the delivery destination area. Thus, even when the self-driving vehicle 50 is parked or stopped in any place in the delivery destination area, the self-driving vehicle 50 does not violate the road traffic law.

One possible example is that the parking-and-stopping prohibition decider 123 extracts a region that is included in the delivery destination area and that does not overlap a parking-and-stopping-prohibited area, and decides whether or not parking and stopping of the self-driving vehicle 50 are prohibited in the delivery destination area on the basis of whether or not the area of the extracted region is larger than a predetermined threshold. With this configuration, when the region that is included in the delivery destination area and that does not overlap a parking-and-stopping-prohibited area is a fractional region, the parking-and-stopping prohibition decider 123 decides that parking and stopping of the self-driving vehicle 50 are not prohibited in the delivery destination area, thus allowing the customer to designate the delivery method using the self-driving vehicle 50. In this case, however, it is necessary to perform processing for locating a region that is included in the delivery destination area and that does not overlap a parking-and-stopping-prohibited area and notifying the self-driving vehicle 50 that parking and stopping are possible in only the located region.

A still another example is that the parking-and-stopping prohibition decider 123 extracts a region that is included in the delivery destination area and that does not overlap a parking-and-stopping-prohibited area and decides whether or not parking and stopping of the self-driving vehicle 50 are prohibited in the delivery destination area on the basis of whether or not a graphic with a predetermined size (e.g., a graphic with a size corresponding to the size of the self-driving vehicle 50) can be arranged in the extracted region. With this configuration, since a determination is made as to whether or not space that is enough for parking and stopping of the self-driving vehicle 50 is available in the region that is included in the delivery destination area and that does not overlap a parking-and-stopping-prohibited area, it is possible to suppress erroneously deciding that the self-driving vehicle 50 can be stopped and parked for the delivery destination even though space that is enough for parking and stopping of the self-driving vehicle 50 is not available. In this case, however, it is necessary to perform processing for extracting a region that is included in the delivery destination area and that does not overlap a parking-and-stopping-prohibited area, locating a region having space that is enough for the parking and stopping of the self-driving vehicle 50, and notifying the self-driving vehicle 50 that the parking and stopping is possible only in the located region.

Referring back to FIG. 11, based on a result of the decision made by the parking-and-stopping prohibition decider 123, the notification information generator 124 generates notification information indicating whether or not the delivery to the delivery destination by using the self-driving vehicle 50 is possible (S5). Specifically, if it is decided in step S4 that parking and stopping of the self-driving vehicle 50 are prohibited in the delivery destination area, the notification information generator 124 generates notification information indicating that the delivery to the delivery destination by using the self-driving vehicle 50 is not possible. On the other hand, if it is decided in step S4 that parking and stopping of the self-driving vehicle 50 are not prohibited in the delivery destination area, the notification information generator 124 generates notification information indicating that the delivery to the delivery destination by using the self-driving vehicle 50 is possible.

In addition to the notification information indicating that the delivery to the delivery destination by using the self-driving vehicle 50 is possible, the notification information generator 124 may generate notification information (one example of second notification information) indicating a position where the self-driving vehicle 50 is to be parked or stopped in the delivery destination area. This allows the customer to pre-recognize at which position the self-driving vehicle 50 is to be parked and stopped.

In addition to the notification information indicating that the delivery to the delivery destination by using the self-driving vehicle 50 is not possible, the notification information generator 124 may generate notification information (one example of fourth notification information) indicating the relationship between the delivery destination area and the parking-and-stopping-prohibited area(s). The notification information indicating the relationship between the delivery destination area and the parking-and-stopping-prohibited area is, for example, information obtained by superimposing the delivery destination area and parking-and-stopping-prohibited areas on the road-map data, as illustrated in FIG. 13. This allows the customer to specifically recognize the relationship between the delivery destination area and the parking-and-stopping-prohibited areas.

After the notification information generator 124 generates the notification information in step S5, the communication controller 121 transmits the notification information generated by the notification information generator 124 to the customer terminal 2 (S6). As a result, the customer terminal 2 displays, on the display unit 22, the notification information transmitted from the management apparatus 1.

In the example illustrated in FIG. 14, a message box 43a indicating "Delivery to the designated delivery destination by using a self-driving vehicle is available." is displayed in the input area 42 on the delivery-destination-information entry screen 40 as the notification information indicating that the delivery to the delivery destination by using the self-driving vehicle 50 is possible. In this case, when the customer clicks the "drop-down arrow" button in the option entry field in "Delivery method" in the input area 42 on the delivery-destination-information entry screen 40", i) a delivery method using a vehicle driven by a driver and ii) a delivery method using the self-driving vehicle 50 are displayed as delivery methods that can be designated. By taking into account the notification information displayed on the display unit 22, the customer can designate one of the above-described two delivery methods as a delivery method. When the customer designates the delivery method, the customer terminal 2 transmits information of the designated delivery method to the management apparatus 1.

In the example illustrated in FIG. 15, a message box 43b indicating "Delivery to the designated delivery destination by using a self-driving vehicle is not available." is displayed in the input area 42 on the delivery-destination-information entry screen 40 as the notification information indicating that the delivery to the delivery destination by using the self-driving vehicle 50 is not possible. In this case, when the customer clicks the "drop-down arrow" button in the option entry field "Delivery method" in the input area 42 on the delivery-destination-information entry screen 40, only the delivery method using a vehicle driven by a driver is displayed as a delivery method that can be designated. In this case, notification information (one example of fifth notification information) indicating that accepting the designation of the delivery method using the self-driving vehicle 50 is disabled is transmitted from the management apparatus 1 to the customer terminal 2. Based on this notification information, only the delivery method using a vehicle driven by a driver is displayed in the option entry field in "Delivery method". This prevents the customer from erroneously designating the delivery method using the self-driving vehicle 50.

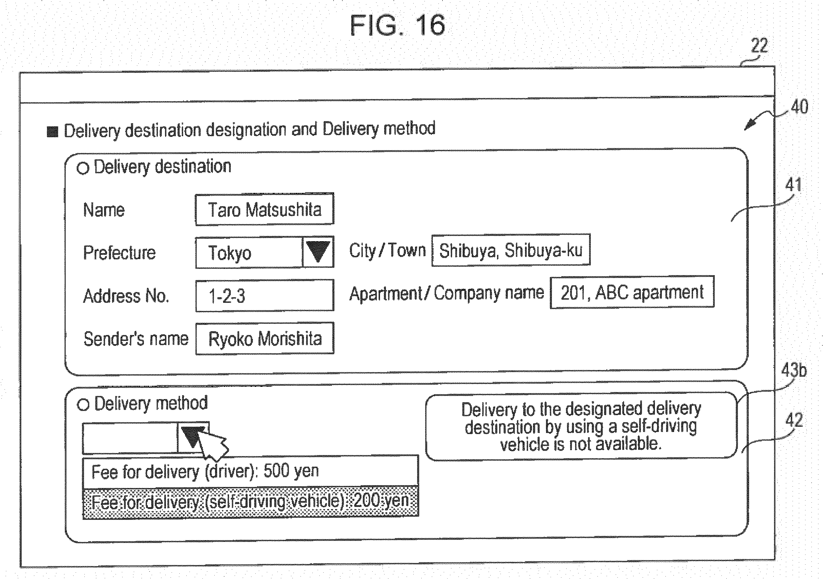

Instead of such a display method, for example, the delivery method using the self-driving vehicle 50 may be displayed in gray as an option in "Delivery method" in the input area 42 on the delivery-destination-information entry screen 40 so that the customer cannot designate the delivery method, as illustrated in FIG. 16. In this case, notification information (one example of third notification information) indicating the delivery-destination-information entry screen 40 set so that the delivery method using the self-driving vehicle 50 cannot be designated is transmitted from the management apparatus 1 to the customer terminal 2. Alternatively, the delivery method using the self-driving vehicle 50 may be displayed as an option for "Delivery method" so that the customer can designate the delivery method, and when the customer designates the delivery method using the self-driving vehicle 50, an alert indicating that the delivery method using the self-driving vehicle 50 cannot be designated may be displayed.

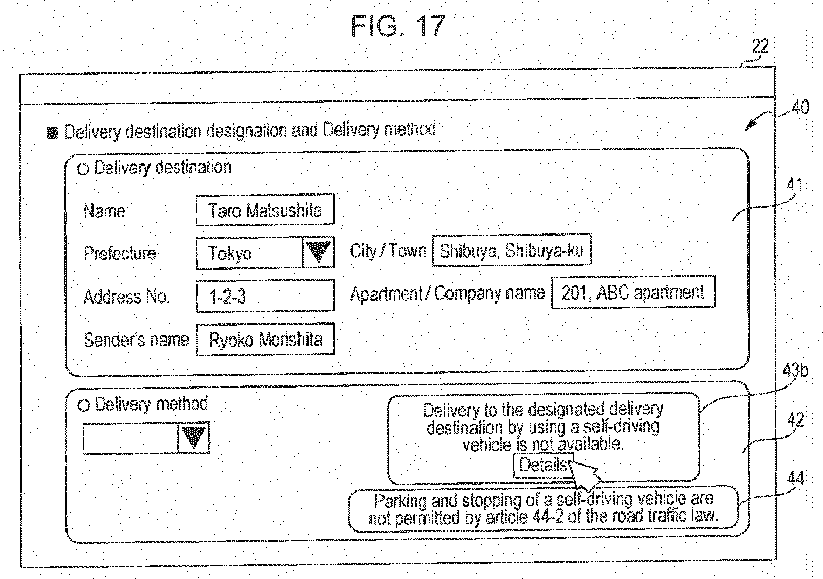

When the notification information indicating that the delivery to the delivery destination by using the self-driving vehicle 50 is not possible is displayed on the customer terminal 2, the reason thereof may also be displayed together on the customer terminal 2. In this case, notification information (one example of sixth notification information) indicating the reason why delivery using the self-driving vehicle 50 is not possible is transmitted from the management apparatus 1 to the customer terminal 2. In this case, the notification information indicating the reason why delivery using the self-driving vehicle 50 is not possible is, for example, information indicating that parking and stopping of the self-driving vehicle 50 at the place indicating by the delivery destination information are not permitted by the road traffic law. In the example illustrated in FIG. 17, a message box 44 indicating "Parking and stopping of a self-driving vehicle are not permitted by article 44-2 of the road traffic law." is displayed in the input area 42 on the delivery-destination-information entry screen 40 as the reason why the delivery to the delivery destination by using the self-driving vehicle 50 is not possible. This allows the customer to know the reason why the delivery to the delivery destination area by using the self-driving vehicle 50 is not possible.

Although, in the present embodiment, whether or not the delivery to the delivery destination by using the self-driving vehicle 50 is possible is presented before the customer designates a delivery method, whether or not the delivery to the delivery destination by using the self-driving vehicle 50 is possible may be decided after the customer designates the delivery method. In the case of this configuration, the customer terminal 2 transmits option information of the delivery method, in addition to the delivery destination information, to the management apparatus 1. With this configuration, since it is sufficient to perform processing for presenting whether or not the delivery to the delivery destination by using the self-driving vehicle 50 is possible only when the customer designates the delivery method using the self-driving vehicle 50, the processing can be performed only when it is necessary. In this case, when the option information of the delivery method includes the delivery method using the self-driving vehicle 50, and the management apparatus 1 decides that the delivery to the delivery destination by using the self-driving vehicle 50 is not possible, the delivery method using the self-driving vehicle 50, the delivery method being designated by the customer, may be disabled. This configuration makes it possible to prevent designation of the delivery method using the self-driving vehicle 50 from being permitted even when the delivery to the delivery destination by using the self-driving vehicle 50 is not possible.

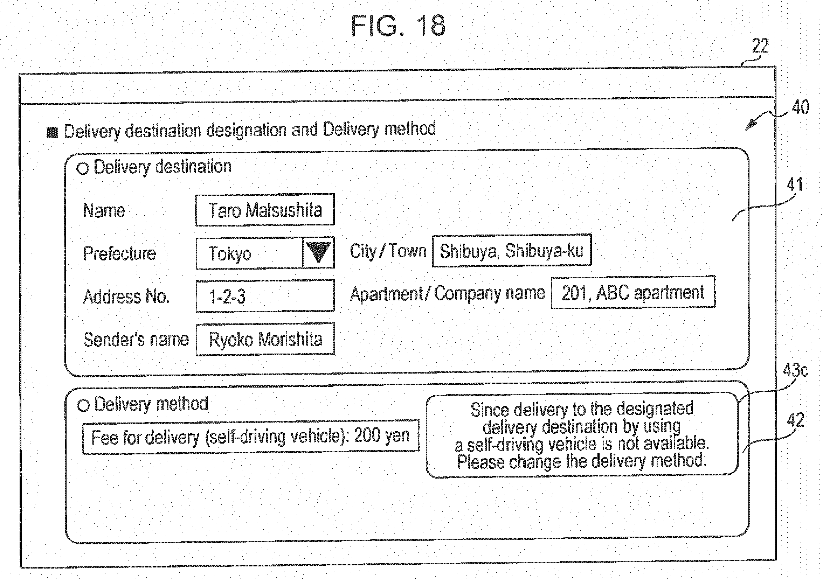

Information indicating that the delivery to the delivery destination by using the self-driving vehicle 50 is not possible and an alert for prompting a change of the delivery method may also be displayed in the input area 42 on the delivery-destination-information entry screen 40. In the example illustrated in FIG. 18, a message box 43c indicating "Delivery to the designated delivery destination by using a self-driving vehicle is not available. Please change the delivery method." is displayed in the input area 42 on the delivery-destination-information entry screen 40. This allows the customer to recognize what processing he or she needs to perform.

### [1-5. Advantage]

With the configuration described above, during designation of a package delivery method, the customer can designate a delivery method after recognizing whether or not the delivery of a package to the delivery destination by using the self-driving vehicle is possible.

### (Second Embodiment)

### [2-1. Functional Configuration of Management Apparatus]

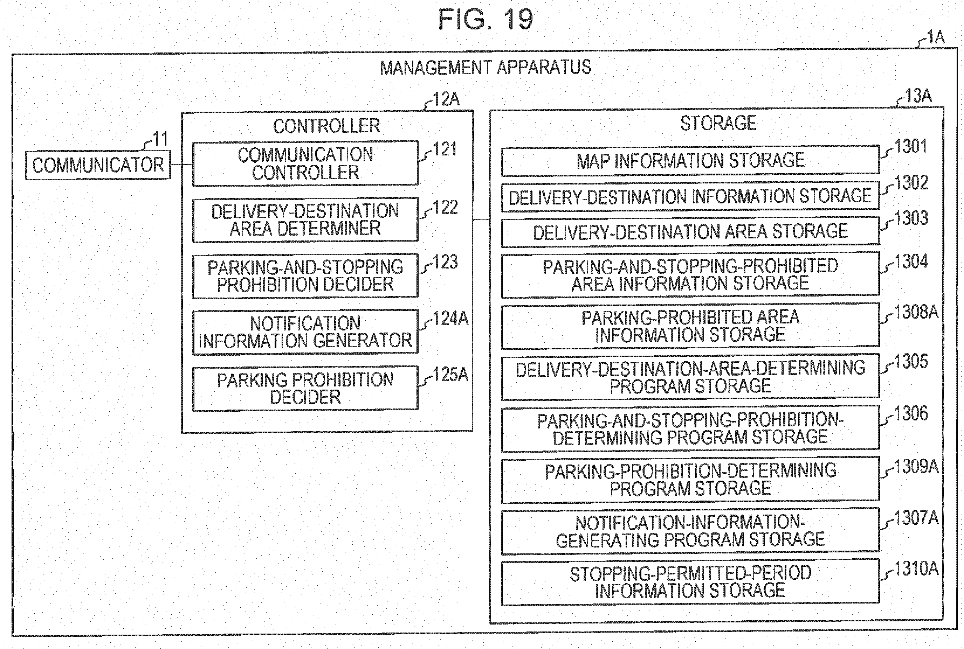

Next, the functional configuration of a management apparatus 1A according to a second embodiment will be described with reference to FIG. 19. FIG. 19 is a block diagram illustrating the functional configuration of the management apparatus 1A according to the second embodiment. In each embodiment described below, constituent elements that are the same as those in the first embodiment are denoted by the same reference numerals, and descriptions thereof are not given hereinafter.

Differences of the management apparatus 1A illustrated in FIG. 19 from the management apparatus 1 illustrated in FIG. 2 are a controller 12A and a storage 13A.

Differences of the controller 12A from the controller 12 in the management apparatus 1 illustrated in FIG. 2 are a parking prohibition decider 125A and a notification information generator 124A.

The parking prohibition decider 125A operates based on a parking-and-stopping-prohibition-determining program stored in a parking-prohibition-determining program storage 1309A (described below). More specifically, based on parking-prohibited area information stored in a parking-prohibited area information storage 1308A (described below), the parking prohibition decider 125A decides whether or not parking of the self-driving vehicle 50 (see FIG. 13) is prohibited in the delivery destination area. The decision method for the parking prohibition decider 125A is the same as or similar to the decision method for the parking-and-stopping prohibition decider 123.

The notification information generator 124A operates based on the notification-information-generating program stored in the notification-information-generating program storage 1307A (described below). More specifically, when the parking-and-stopping prohibition decider 123 decides that parking and stopping of the self-driving vehicle 50 are prohibited in a delivery destination area, the notification information generator 124A generates notification information indicating that the delivery to the delivery destination by using the self-driving vehicle 50 is not possible. Also, when the parking-and-stopping prohibition decider 123 decides that parking and stopping of the self-driving vehicle 50 are not prohibited in the delivery destination area, and the parking prohibition decider 125A decides that parking of the self-driving vehicle 50 is not prohibited in the delivery destination area, the notification information generator 124A generates notification information indicating that the delivery to the delivery destination by using the self-driving vehicle 50 is possible. Also, when the parking-and-stopping prohibition decider 123 decides that parking and stopping of the self-driving vehicle 50 are not prohibited in the delivery destination area, and the parking prohibition decider 125A decides that parking of the self-driving vehicle 50 is prohibited in the delivery destination area, the notification information generator 124A generates notification information indicating that the delivery to the delivery destination by using the self-driving vehicle 50 is possible with a condition. The "condition" in this case is a condition that the self-driving vehicle 50 can only be stopped in the delivery destination area and the stopping-permitted period is limited. The stopping-permitted period is information stored in a stopping-permitted-period information storage 1310A (described below).

Differences of the storage 13A from the storage 13 in the management apparatus 1 illustrated in FIG. 2 are the parking-prohibited area information storage 1308A (one example of a second storage), the parking-prohibition-determining program storage 1309A, the notification-information-generating program storage 1307A, and the stopping-permitted-period information storage 1310A.

The parking-prohibited area information storage 1308A stores parking-prohibited area information therein. The parking-prohibited area information is, for example, information obtained by superimposing, on the road-map data, parking-prohibited areas that were determined based on article 45 of the road traffic law and where parking of vehicles is prohibited.

For example, on the basis of the regulation "4. Portions within 5 meters from the position where a fire hydrant or a designated-firefighting-water-source sign is provided or from or a water inlet or a suction-pipe throw-in opening of a firefighting-water storage tank" in article 45 of the road traffic law, the parking-prohibited area information can be generated by extracting the positions of fire hydrants and designated-firefighting-water-source signs from the road-map data stored in the map information storage 1301 and superimposing, on the road-map data, the regions of portions within 5 meters from the extracted positions. The parking-prohibited area information may be data automatically generated using a dedicated program or may be data manually generated by an administrator or the like. Alternatively, the parking-prohibited area information may be data generated by combining the automatically generated data and the manually generated data. When an external server or the like that provides information indicating parking-prohibited areas is available, the information indicating the parking-prohibited areas may be obtained from the external server or the like.

Also, information including parking-prohibited area information determined based on the road traffic law and parking-prohibited area information obtained from an external server or the like may be stored as the parking-prohibited area information. Since article 45 of the road traffic law defines that portions within a predetermined distance from a location where road construction is carried out or a location where a firefighting facility exists are parking-prohibited regions, pieces of information regarding locations where road constructions are carried out and locations where firefighting facilities are provided are required. These pieces of information can be obtained from, for example, an external institution, such as a public institution or a construction company.

The parking-prohibition-determining program storage 1309A stores therein a parking-prohibition-determining program to be executed by the parking prohibition decider 125A.

The notification-information-generating program storage 1307A stores therein the notification-information-generating program to be executed by the notification information generator 124A.

The stopping-permitted-period information storage 1310A stores therein a stopping-permitted period indicating a period in which the self-driving vehicle 50 can be stopped. The stopping-permitted period is a period (e.g., 5 minutes) in which the stopping is not regarded as being parking by, for example, article 2-18 of the road traffic law. The stopping-permitted period may be any period (e.g., 3 minutes) as long as it is shorter than a period that is not regarded as being parking by the road traffic law.

### [2-2. Flow of Processing in Management Apparatus]

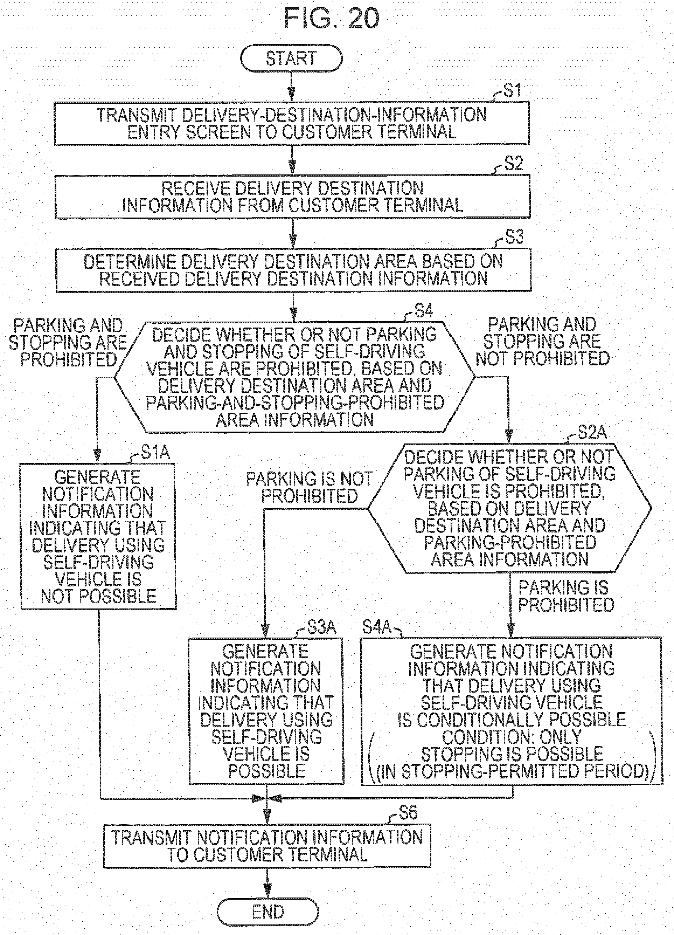

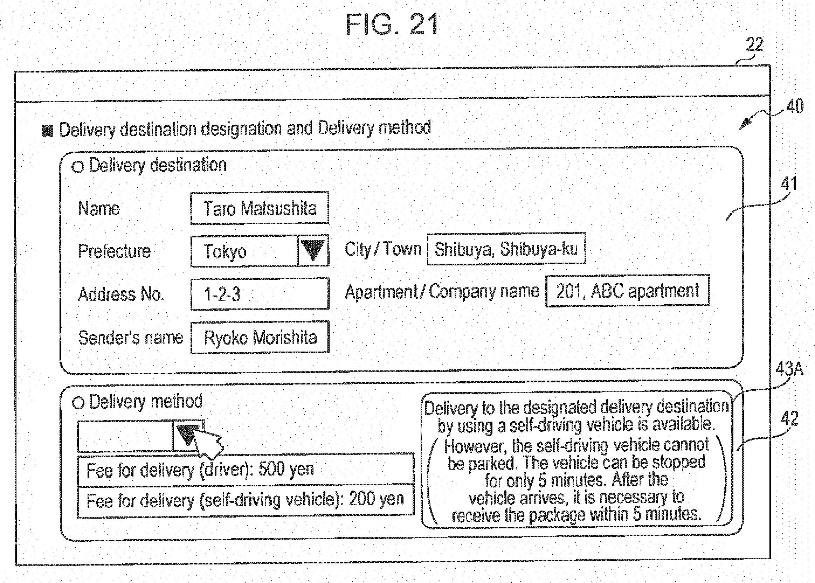

Next, the flow of processing in the management apparatus 1A when the customer designates a package delivery method, for example, in online shopping will be described with reference to FIGS. 20 and 21. FIG. 20 is a flowchart illustrating the flow of processing in the management apparatus 1A according to the second embodiment. FIG. 21 is a view illustrating one example of the notification information indicating that the delivery to the delivery destination by using the self-driving vehicle 50 is possible with a condition that the self-driving vehicle 50 can only be stopped in the delivery destination area. In the flowchart illustrated in FIG. 20, steps that are the same as those in the flowchart illustrated in FIG. 11 are denoted by the same step numbers, and descriptions thereof are not given hereinafter.

Differences in the flowchart illustrated in FIG. 20 from the flowchart illustrated in FIG. 11 are steps S1A, S2A, S3A, and S4A.

First, steps S1 to S4 are executed as in the first embodiment. If it is decided in step S4 that parking and stopping of the self-driving vehicle 50 are prohibited in the delivery destination area, the notification information generator 124A generates notification information indicating that the delivery to the delivery destination by using the self-driving vehicle 50 is not possible (S1A).

On the other hand, if it is decided in step S4 that parking and stopping of the self-driving vehicle 50 are not prohibited in the delivery destination area, the parking prohibition decider 125A decides whether or not parking of the self-driving vehicle 50 is prohibited in the delivery destination area, based on the parking-prohibited area information stored in the parking-prohibited area information storage 1308A (S2A).

If it is determined in step S2A that parking of the self-driving vehicle 50 is not prohibited in the delivery destination area, the notification information generator 124A generates notification information indicating that the delivery to the delivery destination by using the self-driving vehicle 50 is possible (S3A).

On the other hand, if it is decided in step S2A that parking of the self-driving vehicle 50 is prohibited in the delivery destination area, the notification information generator 124A generates notification information indicating that the delivery to the delivery destination by using the self-driving vehicle 50 is possible with a condition that the self-driving vehicle 50 can only be stopped in the delivery destination area (S4A). In this case, the notification information generator 124A generates notification information (one example of seventh notification information) indicating the stopping-permitted period of the self-driving vehicle 50, the stopping-permitted period being stored in the stopping-permitted-period information storage 1310A. Those pieces of notification information are transmitted from the management apparatus 1A to the customer terminal 2 (see FIG. 1). In the example illustrated in FIG. 21, a message box 43A indicating the condition that the self-driving vehicle 50 can only be stopped in the delivery destination area and a message "However, the self-driving vehicle cannot be parked. The vehicle can be stopped for only 5 minutes. After the vehicle arrives, it is necessary to receive the package within 5 minutes." is displayed in the input area 42 on the delivery-destination-information entry screen 40 as the condition and the stopping-permitted period.

Thereafter, step S6 is executed as in the first embodiment.

### [2-3. Advantages]

The above-described configuration makes it possible to notify the customer of information indicating that the delivery to the delivery destination designated by the customer is possible using the self-driving vehicle 50, but parking of the self-driving vehicle 50 is prohibited at the delivery destination, and thus the self-driving vehicle 50 cannot be parked and can be stopped within only a stopping-permitted period. This allows the customer to designate a delivery method by taking the information into account.

### [2-4. Modifications, etc.]

Although, in the second embodiment, the notification information indicating that the delivery to the delivery destination by using the self-driving vehicle 50 is conditionally possible is transmitted to the customer terminal 2 when parking of the self-driving vehicle 50 is prohibited in the delivery destination area, notification information indicating that the delivery using the self-driving vehicle 50 is not possible may be transmitted to the customer terminal 2. When the self-driving vehicle 50 can only be stopped in the delivery destination area, the stopping-permitted period of the self-driving vehicle 50 is relatively short, and thus it is necessary to create a scheme for making the timing at which the self-driving vehicle 50 arrives at the delivery destination and the timing at which the recipient receives the package match each other. However, when the notification information indicating that the delivery using the self-driving vehicle 50 is not possible is transmitted to the customer terminal 2, the above-described scheme becomes unnecessary.

In the second embodiment, when it is decided in step S2A that parking of the self-driving vehicle 50 is not prohibited in the delivery destination area, the notification information generator 124A generates the notification information indicating that the delivery to the delivery destination by using the self-driving vehicle 50 is possible. Instead of such a configuration, the notification information generator 124A may generate notification information indicating that parking of the self-driving vehicle 50 is possible in the delivery destination area, in addition to the notification information indicating that the delivery to the delivery destination by using the self-driving vehicle 50 is possible. This allows the customer to designate a delivery method after recognizing that the delivery using the self-driving vehicle 50 is possible and parking of the self-driving vehicle 50 is possible.

Even when the notification information indicating that the delivery to the delivery destination by using the self-driving vehicle 50 is displayed on the customer terminal 2, and the customer designates the delivery method using the self-driving vehicle 50, there is a case in which the self-driving vehicle 50 cannot be parked or stopped in the delivery destination in practice. Examples of such a case include a case in which another vehicle is parked or stopped in the delivery destination and a case in which the self-driving vehicle 50 detects, in the surroundings of the delivery destination, a parking-and-stopping prohibited sign that is not included in the road-map data. Accordingly, when the notification information indicating that the delivery to the delivery destination by using the self-driving vehicle 50 is possible is displayed on the customer terminal 2, notification information indicating that there is a possibility that the delivery using the self-driving vehicle 50 is not possible depending on the situation of the delivery destination, together with that notification information, may also be displayed on the customer terminal 2. This allows the customer to designate a delivery method after recognizing that there is a possibility that the delivery using the self-driving vehicle 50 is not possible depending on the situation of the delivery destination.

The road traffic law described in the first and second embodiments is one example, and advantages that are the same as or similar to those described above can be obtained with any rule concerning parking-and-stopping prohibition and parking prohibition.

Depending on the place, each of the parking-prohibited areas under the road traffic law described above in the second embodiment may be designated as a parking-prohibited area in a particular time slot and/or a particular day of the week (or, at least one of a particular time slot and a particular day of the week). Thus, the management apparatus 1 may be configured to generate, when the delivery destination area overlaps a region that is designated as a parking-prohibited area in a particular time slot and/or on a particular day of the week, notification information indicating whether the self-driving vehicle 50 can be parked or the self-driving vehicle 50 can only be stopped in the particular time slot and/or on the particular day of the week and to transmit the generated notification information to the customer terminal 2.

For example, when the delivery destination area overlaps a region that is designated as a parking-prohibited area in a particular time slot and/or on a particular day of the week, and the customer does not designate the date and time of the delivery, a) notification information indicating information of the time slot and/or the day of the week (a particular period) for the delivery destination area is designated as the parking-prohibited area, b) notification information indicating that only stopping is possible in the time slot and/or on the day of the week for which the delivery destination area is designated as the parking-prohibited area, and c) notification information indicating that parking is possible except in the time slot and/or on the day of the week for which the delivery destination area is designated as the parking-prohibited area may be generated and be transmitted to the customer terminal 2.

Also, when the delivery destination area overlaps a region that is designated as a parking-prohibited area in a particular time slot and/or on a particular day of the week, and the delivery date and time designated by the customer is included in the particular time slot and/or the particular day of the week for which the delivery destination area is designated as a parking-prohibited area, notification information indicating that the self-driving vehicle 50 can only be stopped in the delivery destination area and notification information indicating that parking is possible in a period other than the time slot and/or the day of the week for which the delivery destination area is designated as the parking-prohibited area may be generated and be transmitted to the customer terminal 2.

On the other hand, when the delivery date and time designated by the customer is not included in a particular time slot and/or a particular day of the week for which the delivery destination area is designated as a parking-prohibited area, notification information indicating that parking of the self-driving vehicle 50 is possible and notification information indicating that only stopping is possible in the time slot and/or on the day of the week for which the delivery destination area is designated as the parking-prohibited area may be generated and be transmitted to the customer terminal 2. This allows the customer to designate a delivery method after recognizing the time slot and/or the day of the week in/on which parking of the self-driving vehicle 50 is possible and the time slot and/or the day of the week in/on which only stopping of the self-driving vehicle 50 is possible.

With this configuration, the parking-prohibited area information stored in the parking-prohibited area information storage 1308A in a management apparatus 2A is separately stored as dynamic parking-prohibited area information regarding dynamic parking-prohibited areas where parking of vehicles is prohibited in particular time slots and/or on particular days of the week and static parking-prohibited area information indicating static parking-prohibited areas where parking of vehicles is prohibited at all times. The dynamic parking-prohibited areas are constituted by a plurality of regions, each of which is stored in association with information of a time slot and/or a day of the week for which the corresponding region is designated as a parking-prohibited area.

Similarly, each of the parking-and-stopping-prohibited areas under the road traffic law is also designated as a parking-and-stopping-prohibited area in a particular time slot and/or a particular day of the week, and thus, when the delivery destination area overlaps a region that is designated as a parking-and-stopping-prohibited area in a particular time slot and/or on a particular day of the week, notification information indicating that whether or not the delivery using the self-driving vehicle 50 is possible varies in a particular time slot and/or on a particular day of the week may be generated and be transmitted to the customer terminal 2.

For example, when the delivery destination area overlaps a region that is designated as a parking-and-stopping-prohibited area in a particular time slot and/or a particular day of the week, and the customer does not designate the date and time of the delivery, notification information indicating information of the time slot and/or the day of the week for which the delivery destination area is designated as the parking-and-stopping-prohibited area may be generated and be transmitted to the customer terminal 2. In this case, only when the delivery date and time input by the customer is in a period other than the time slot and/or the day of the week for which the delivery destination area is designated as the parking-and-stopping-prohibited area, the delivery method using the self-driving vehicle 50 is allowed to be designated using the customer terminal 2. This prevents the customer from designating the delivery method using the self-driving vehicle 50 at a date and time for which the delivery destination area is designated as a parking-and-stopping-prohibited area.

Also, when the delivery destination area overlaps a region that is designated as a parking-and-stopping-prohibited area in a particular time slot and/or on a particular day of the week, and the delivery date and time designated by the customer is included in the time slot and/or the day of the week for which the delivery destination area is designated as the parking-and-stopping-prohibited area, notification information indicating that the delivery using the self-driving vehicle 50 is not possible and notification information indicating that the delivery using the self-driving vehicle 50 is possible in a period other than the time slot and/or the day of the week for which the delivery destination area is designated as the parking-and-stopping-prohibited area may be generated and be transmitted to the customer terminal 2. This allows the customer to designate a delivery method after recognizing the time slot and/or the day of the week in/on which the delivery using the self-driving vehicle 50 is possible.

On the other hand, when the delivery destination area overlaps a region that is designated as a parking-and-stopping-prohibited area in a particular time slot and/or a particular day of the week, and the delivery date and time designated by the customer is not included in the time slot and/or the day of the week for which the delivery destination area is designated as the parking-and-stopping-prohibited area, notification information indicating that the delivery using the self-driving vehicle 50 is possible and notification information indicating that the delivery using the self-driving vehicle 50 is not possible in the time slot and/or on the day of the week for which the delivery destination area is designated as the parking-and-stopping-prohibited area may be generated and be transmitted to the customer terminal 2. This allows the customer to select a delivery method after recognizing that the time slot and/or the day of the week in/on which the delivery using the self-driving vehicle 50 is possible.

With this configuration, the parking-and-stopping-prohibited area information stored in the parking-and-stopping-prohibited area information storage 1304 in the management apparatus 2A is separately stored as dynamic parking-and-stopping-prohibited area information regarding dynamic parking-and-stopping-prohibited areas where parking and stopping of vehicles are prohibited in particular time slots and/or on particular days of the week and static parking-and-stopping-prohibited area information regarding static parking-and-stopping-prohibited areas where parking and stopping of vehicles are prohibited at all times. The dynamic parking-and-stopping-prohibited areas are constituted by a plurality of regions, each of which is stored in association with information of the time slot and/or the day of the week for which the corresponding region is designated as a parking-and-stopping prohibited area.

### (Third Embodiment)

### [3-1. Functional Configuration of Management Apparatus]

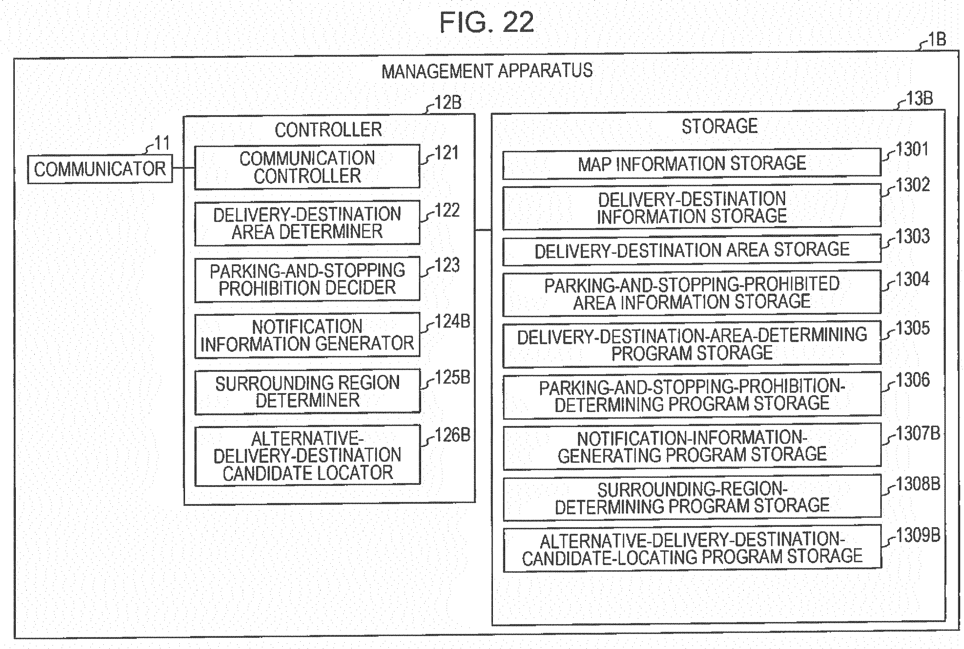

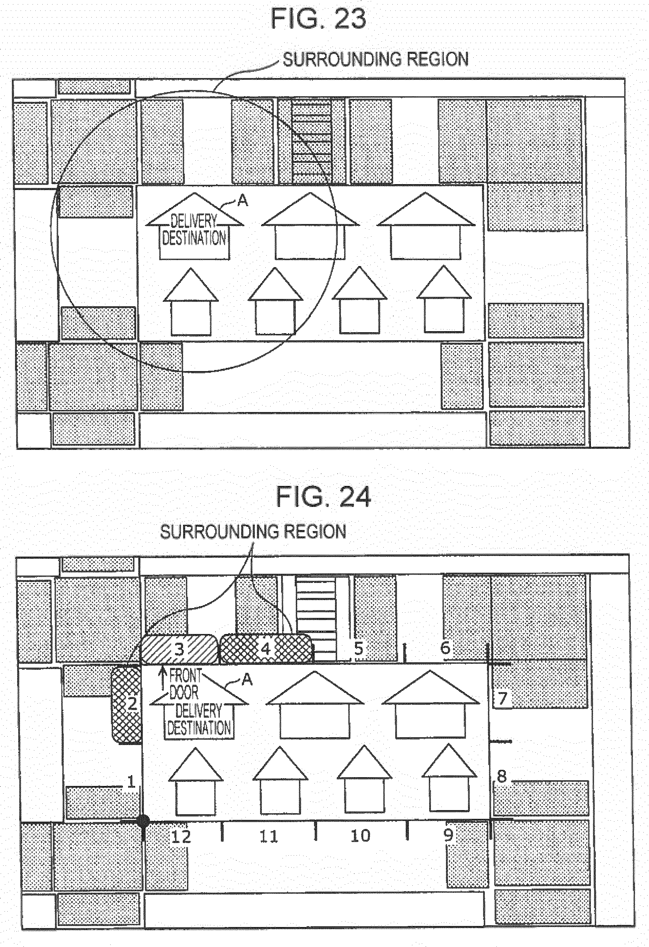

Next, the functional configuration of a management apparatus 1B according to a third embodiment will be described with reference to FIGS. 22 to 24. FIG. 22 is a block diagram illustrating the functional configuration of the management apparatus 1B according to the third embodiment. FIG. 23 is a diagram illustrating a first example of a surrounding region of a delivery destination, the surrounding region being determined by a surrounding region determiner 125B. FIG. 24 is a diagram illustrating a second example of the surrounding region of the delivery destination, the surrounding region being determined by the surrounding region determiner 125B.

Differences of the management apparatus 1B illustrated in FIG. 22 from the management apparatus 1 illustrated in FIG. 2 are a controller 12B and a storage 13B.

Differences of the controller 12B from the controller 12 in the management apparatus 1 illustrated in FIG. 2 are a notification information generator 124B, the surrounding region determiner 125B, and an alternative-delivery-destination candidate locator 126B.

The surrounding region determiner 125B performs processing for determining a surrounding region of the delivery destination, based on the delivery destination information. The surrounding region determined by the surrounding region determiner 125B is a region to be searched for an alternative candidate area, which is an alternative place in the delivery destination area. The surrounding region is determined based on a predetermined rule. A possible example of the predetermined rule for determining the surrounding region is a rule for determining, as the surrounding region, a region within a predetermined distance from the location indicated by the delivery destination information, as illustrated in FIG. 23. Another possible example of the predetermined rule is a rule for determining, as surrounding regions, destination areas located adjacent to the location (address) indicated by the delivery destination information, as illustrated in FIG. 24. In the example illustrated in FIG. 24, the location indicated by the delivery destination information is "3", locations adjacent to the delivery destination information are "2" and "4", and delivery destination areas at the locations "2" and "4" (the regions indicated by the crossed diagonal lines) are surrounding regions.

The alternative-delivery-destination candidate locator 126B locates an alternative candidate area, which is an alternative place of the delivery destination area, based on the surrounding region(s) determined by the surrounding region determiner 125B and the parking-and-stopping-prohibited areas. The alternative-delivery-destination candidate locator 126B extracts, for example, a region that is included in the surrounding region(s) and that is not a parking-and-stopping-prohibited area, and upon determining that the area of the extracted region that is not a parking-and-stopping-prohibited area is larger than a predetermined threshold, the alternative-delivery-destination candidate locator 126B locates the region as an alternative candidate area. Alternatively, the alternative-delivery-destination candidate locator 126B may extract a region that is included in the surrounding region(s) and that is not a parking-and-stopping-prohibited area, and upon determining that a graphic with a predetermined size (e.g., a graphic with a size corresponding to the size of the self-driving vehicle 50) can be arranged in a region other than the extracted parking-and-stopping-prohibited area, the alternative-delivery-destination candidate locator 126B may locate the region as an alternative candidate area. When the number of extracted regions other than parking-and-stopping-prohibited areas is two or more, processing that is the same as or similar to the processing described above is performed on each of the regions. In this case, a plurality of alternative candidate areas is located.

Differences of the storage 13B from the storage 13 in the management apparatus 1 illustrated in FIG. 2 are the notification-information-generating program storage 1307B, a surrounding-region-determining program storage 1308B, and an alternative-delivery-destination-candidate-locating program storage 1309B.

The notification-information-generating program storage 1307B stores therein a notification-information-generating program to be executed by the notification information generator 124B.

The surrounding-region-determining program storage 1308B stores therein a surrounding-region-determining program to be executed by the surrounding region determiner 125B.

The alternative-delivery-destination-candidate-locating program storage 1309B stores therein an alternative-delivery-destination-candidate-locating program to be executed by the alternative-delivery-destination candidate locator 126B.

### [3-2. Flow of Processing in Management Apparatus]

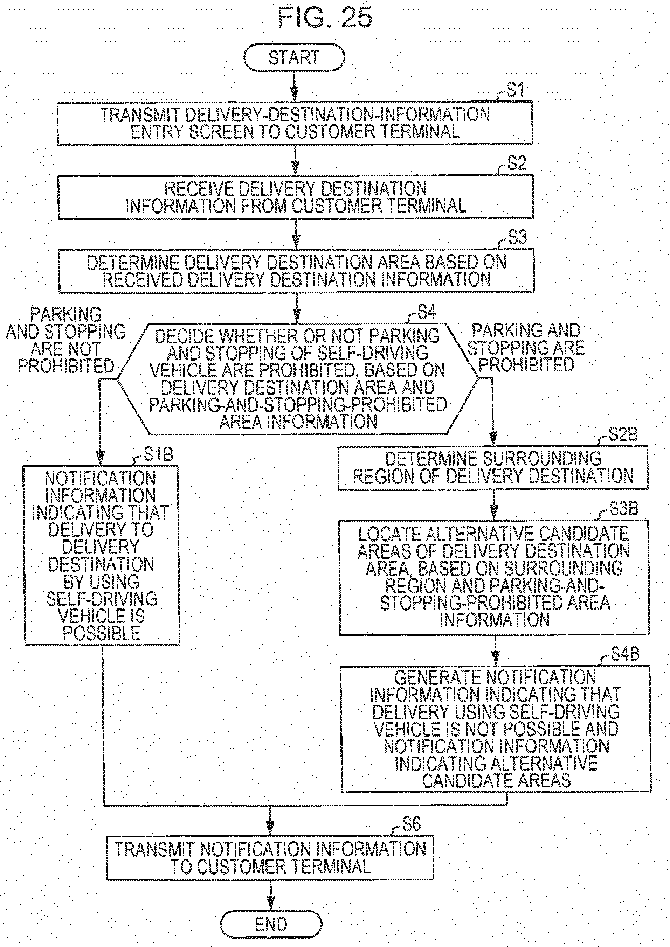

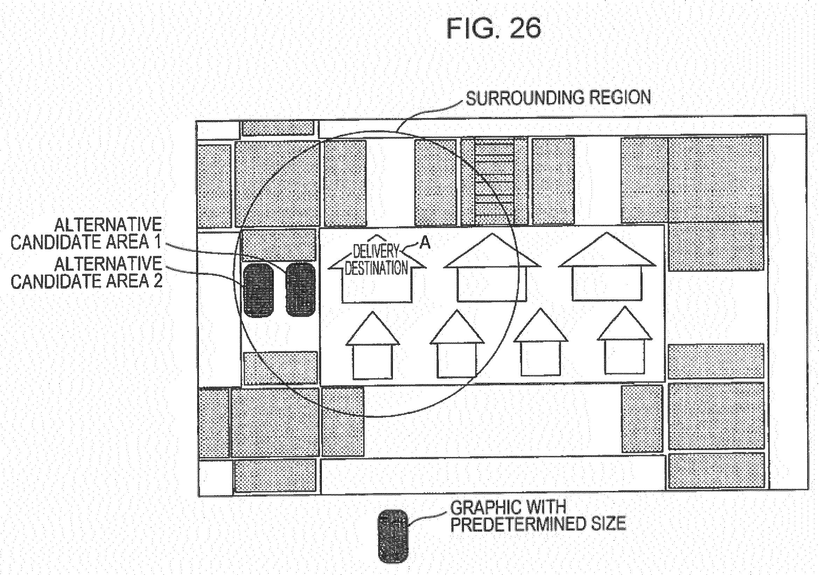

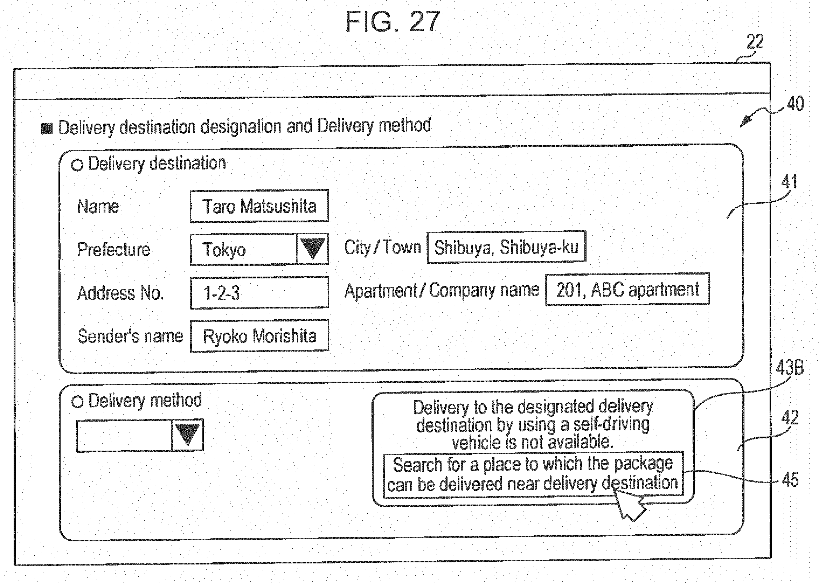

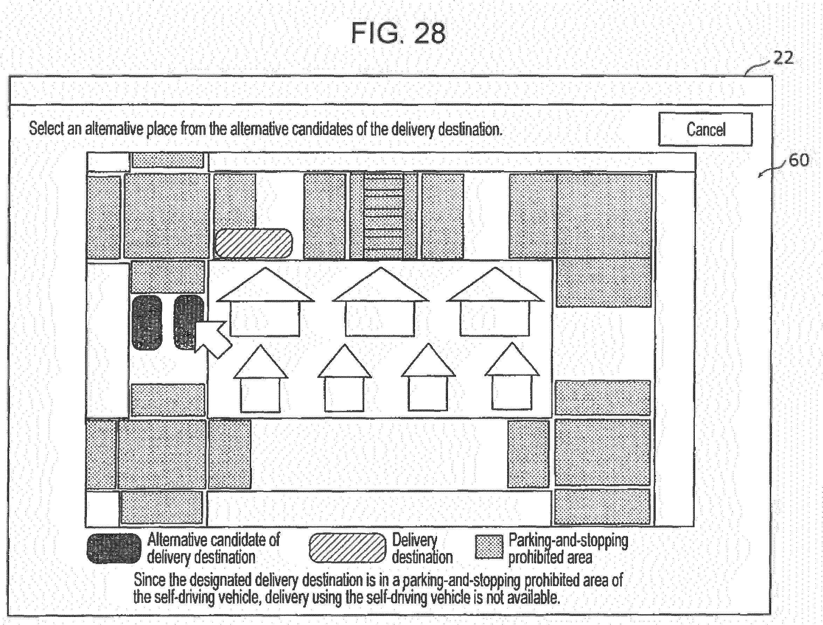

Next, the flow of processing in the management apparatus 1B when the customer designates a package delivery method, for example, in online shopping will be described with reference to FIGS. 25 to 28. FIG. 25 is a flowchart illustrating the flow of processing in the management apparatus 1B according to the third embodiment. FIG. 26 is a diagram illustrating one example of alternative candidate areas of the delivery destination area. FIG. 27 is a view illustrating one example of notification information indicating that the delivery to the delivery destination area by using the self-driving vehicle 50 is not possible. FIG. 28 is a diagram illustrating one example of notification information indicating alternative candidate areas. In the flowchart illustrated in FIG. 25, steps that are the same as those in the flowchart illustrated in FIG. 11 are denoted by the same step numbers, and descriptions thereof are not given hereinafter.

Differences in the flowchart illustrated in FIG. 25 from the flowchart illustrated in FIG. 11 are steps S1B, S2B, S3B, and S4B.

First, steps S1 to S4 are executed as in the first embodiment. If it is decided in step S4 that parking and stopping of the self-driving vehicle 50 are not prohibited in the delivery destination area, the notification information generator 124B generates notification information indicating that the delivery to the delivery destination by using the self-driving vehicle 50 is possible (S1B).

On the other hand, if it is decided in step S4 that parking and stopping of the self-driving vehicle 50 are prohibited in the delivery destination area, the surrounding region determiner 125B determines a surrounding region of the delivery destination, based on the delivery destination information received from the customer terminal 2, which is illustrated in FIG. 1 (S2B).

Thereafter, in step S2B, the alternative-delivery-destination candidate locator 126B locates alternative candidate areas of the delivery destination area, based on the determined surrounding region and the parking-and-stopping-prohibited area information stored in the parking-and-stopping-prohibited area information storage 1304 (S3B). For example, as illustrated in FIG. 26, the alternative-delivery-destination candidate locator 126B locates regions that are included in the surrounding region and that are not parking-and-stopping prohibited areas and locates, as alternative candidate areas, extracted regions (denoted by dark gray patterns) that satisfy a condition that a graphic with a predetermined size (e.g., a graphic corresponding to the size of the self-driving vehicle 50) can be arranged in regions that are not the parking-and-stopping-prohibited areas. More specifically, the alternative-delivery-destination candidate locator 126B extracts roadway regions that are included in the extracted regions and that are not the parking-and-stopping-prohibited areas, and upon deciding that the graphic with the predetermined size can be arranged in the extracted roadway regions, the alternative-delivery-destination candidate locator 126B locates, as an alternative candidate area, a place that is included in the extracted roadway regions, that is the closest to the delivery destination, and in which the graphic with the predetermined size is arranged.

In the case of Japan, when a vehicle is to be parked on a road, the vehicle is pulled over to the left side of a roadway for stopping and parking. Thus, it is desirable to have a configuration in which whether or not the graphic with the predetermined size can be arranged is determined by placing the graphic with the predetermined size adjacently to the left side of each extracted roadway region and moving the graphic in a vehicle traveling direction. In the case of this configuration, the direction of the graphic with the predetermined size is determined and then the graphic is moved. More specifically, a portion included in the graphic with the predetermined size and corresponding to the front portion of the self-driving vehicle 50 is determined as the front side of the graphic with the predetermined size, and then the graphic with the predetermined size is moved. As opposed to the case of Japan, when vehicles travel on the right side of a roadway, advantages that are the same as or similar to those described above are provided with a configuration that is opposite to the above-described configuration.

After S3B, the notification information generator 124B generates notification information indicating that the delivery to the delivery destination by using the self-driving vehicle 50 is not possible and notification information (one example of eighth notification information) indicating the alternative candidate areas located by the alternative-delivery-destination candidate locator 126B (S4B).

Thereafter, the communication controller 121 transmits these pieces of notification information generated by the notification information generator 124B to the customer terminal 2 (S6). In the example illustrated in FIG. 27, a message box 43B indicating that the delivery using the self-driving vehicle 50 is not possible and is displayed in the input area 42 on the delivery-destination-information entry screen 40. A button 45 for searching for a place to which the package can be delivered in the surroundings of the delivery destination is provided in the input area 42. When the customer clicks the button 45, for example, a screen 60 for designating an alternative candidate area is displayed, as illustrated in FIG. 28.

### [3-3. Advantage]

With the above-described configuration, when it is decided that delivery to a designated delivery destination by using the self-driving vehicle 50 is not possible, alternative candidate areas in regions in the surroundings of the delivery destination are presented to the customer, and thus the customer can receive a package in any of the alternative candidate areas.

### [3-4. Modifications]

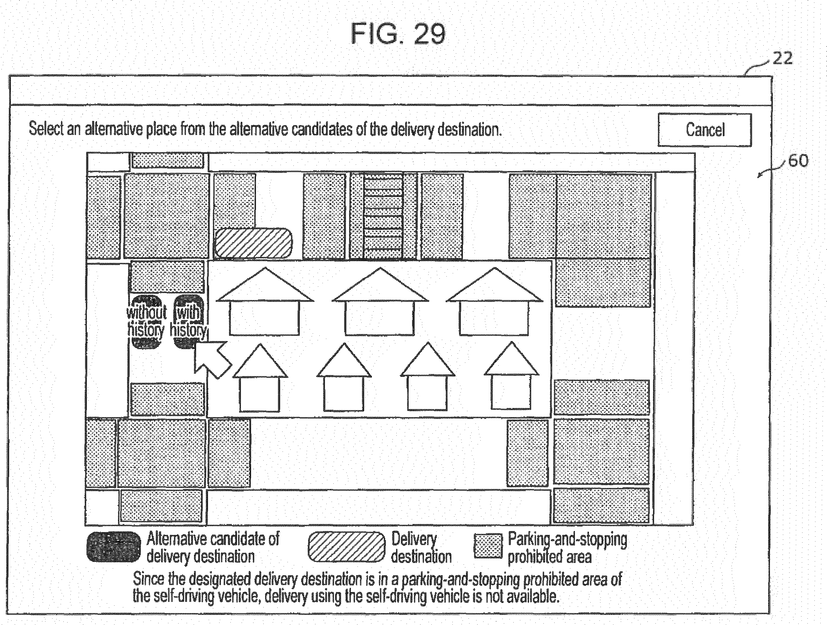

Although, in the third embodiment, the notification information indicating alternative candidate areas is transmitted to the customer terminal 2, notification information (one example of ninth notification information) indicating history of each alternative candidate area having been designated by the customer in the past, in addition to the notification information indicating the alternative candidate areas, may be transmitted to the customer terminal 2. With such a configuration, a customer who has designated the same delivery destination in the past can recognize which alternative candidate area was designated as the alternative place of the delivery destination. As a result, when there is a plurality of alternative candidate areas that serve as alternative places of the delivery destination, the customer can designate an alternative candidate area by referring to the above-described notification information. In the example illustrated in FIG. 29, notification information indicating whether or not there is history of each alternative candidate area having been designated by the customer in the past may be displayed on the display unit 22 of the customer terminal 2 in a manner superimposed on the notification information indicating the alternative candidate areas.

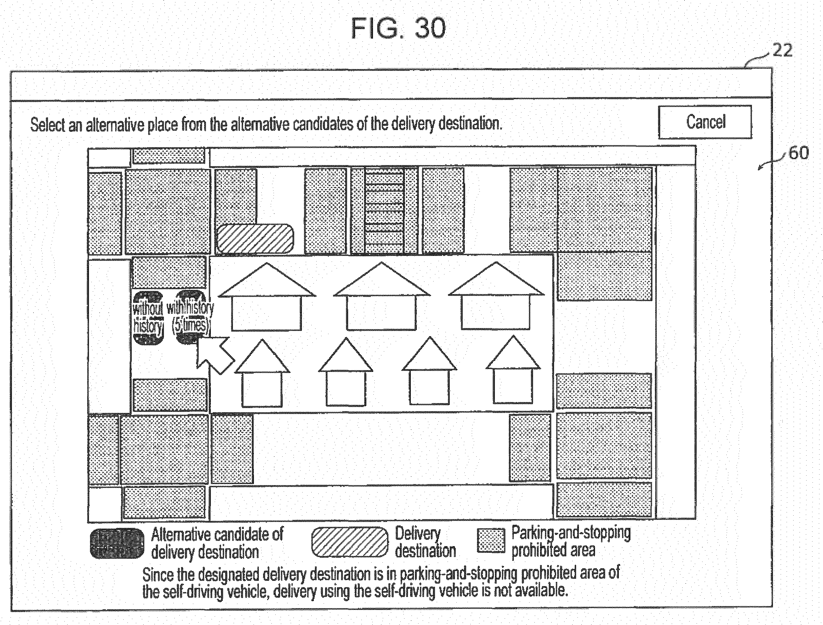

Also, in addition to the notification information indicating the alternative candidate areas, information indicating the history of each alternative candidate area having been designated by the customer in the past and information indicating that the number of times each alternative candidate area was designated in the past may be displayed on the display unit 22 of the customer terminal 2, as illustrated in FIG. 30. With this configuration, a customer who has designated the same delivery destination in the past can recognize the number of times the alternative candidate area was designated, in addition to which alternative candidate area he or she designated as an alternative place of the delivery destination. Thus, the customer can recognize an alternative candidate area that is popular as an alternative place of the delivery destination. The history information used in this case may be past history information of the customer who is designating a delivery method or may be a combination of the history information of the customer and history information of another customer.

In addition, although the description in the third embodiment has been given of a case in which alternative candidate areas that serve as alternative places of the delivery destination are found in the surrounding region, the management apparatus may be configured to perform, when no alternative candidate area is found, processing for further enlarging (changing) the surrounding region and locating an alternative candidate area in the enlarged surrounding region in the manner described above and to repeatedly perform this processing until an alternative candidate area is found. With this configuration, an alternative candidate area that is the closest to the delivery destination can be presented to the customer, regardless of the distance to the delivery destination. When the customer desires only the delivery method using the self-driving vehicle 50, useful information can be presented to the customer.

Also, although, in the third embodiment, alternative candidate areas in the surrounding region are presented when it is decided that the delivery to the delivery destination by using the self-driving vehicle 50 is not possible, the alternative candidate areas in the surrounding region may also be presented even when the delivery method using the self-driving vehicle 50 is possible. The reason is that the place designated as the delivery destination is not necessarily optimum for the customer as the location of the delivery using the self-driving vehicle 50. For example, in a case in which there is a plurality of doorways, such as a case of a large-scale multi-unit residential complex, the position that the front door of the building faces is not necessarily optimum as the location of the delivery using the self-driving vehicle 50. It can also be thought that some customers desire to have the self-driving vehicle 50 to be parked or stopped near another doorway, not the front door. Thus, the display unit 22 of the customer terminal 2 may have a configuration in which a button with which changing the location of the delivery can be designated is displayed so that the location of the delivery using the self-driving vehicle 50 can be changed even when the delivery using the self-driving vehicle 50 is possible, which allows the customer to change the location of the delivery.

Also, the display unit 22 of the customer terminal 2 may have, for example, a configuration in which a button with which changing the location of the delivery can be designated is displayed so that the location of the delivery using the self-driving vehicle 50 can be changed when only stopping of the self-driving vehicle 50 is possible although the delivery using the self-driving vehicle 50 is possible, as in the second embodiment, which allows the customer to change the location of the delivery. Such a configuration allows the customer to change the delivery location to a location where the self-driving vehicle 50 can be parked.

Also, whether each alternative candidate area located by the alternative-delivery-destination candidate locator 126B is a place where only parking is possible or a place where only stopping is possible may be determined based on the parking-prohibited area information, and notification information indicating the alternative candidate area in a form in which a result of the determination can be known may be generated and transmitted to the customer terminal 2. With such a configuration, the customer can recognize whether or not each alternative candidate area is a place where parking is possible or a place where only stopping is possible.

In addition, although a configuration in which each alternative candidate area is located in a region other than parking-prohibited areas has been described in the third embodiment, a configuration in which regions that can be used as alternative candidate areas are pre-stored and regions in the surrounding region of the delivery destination are determined as alternative candidate areas may be employed. Such a configuration eliminates the need for the processing for locating alternative candidate areas in regions other than the parking-prohibited areas, thus making it possible to determine alternative candidate areas by using simple processing.

Also, although a configuration in which alternative candidate areas are located on roadways has been described in the third embodiment, a configuration in which alternative candidate areas are located in regions other than roadways may be employed. For example, when information regarding regions that are included in privately owned areas and where parking and stopping of the self-driving vehicle 50 are possible is available, alternative candidate areas can be located in the privately owned areas. With this configuration, it is possible to locate the alternative candidate areas in regions other than roadways.

When the customer designates an alternative candidate area after the notification information indicating that the delivery using the self-driving vehicle 50 is not possible and the notification information indicating alternative candidate areas are displayed on the display unit 22 of the customer terminal 2, a delivery option using the self-driving vehicle 50 may be displayed on the display screen, used for selecting a delivery destination, so that the customer can designate the option. This configuration allows the customer to designate a method for delivery to the selected alternative candidate area by using the self-driving vehicle 50.

A button for enlarging the surrounding region may be displayed on the display screen for presenting alternative candidate areas, and when the customer clicks the button to enlarge the surrounding region, alternative candidate areas are re-located in the enlarged surrounding region, and the located alternative candidate areas are displayed on the display screen. This configuration allows the customer to locate an alternative candidate area in a region desired by the customer.

Also, although, in the third embodiment, the management apparatus 1B locates alternative candidate areas in the surrounding region of the delivery destination and presents the located alternative candidate areas, the online delivery system may have a configuration in which information obtained by superimposing parking-and-stopping-prohibited area information on map information including the surroundings of the delivery destination is displayed on the display unit 22 of the customer terminal 2 to allow the customer to designate the alternative place of the delivery destination. This configuration requires a configuration for deciding whether or not the self-driving vehicle 50 can deliver to the delivery-destination alternative place designated by the customer. One example of a method for realizing the configuration is a method in which a graphic with a predetermined size (e.g., a graphic with a size corresponding to the size of the self-driving vehicle 50) is arranged in a region that the customer desires to designate as the alternative place of the delivery destination, and a determination may be made as to whether or not the arranged graphic overlaps a parking-and-stopping-prohibited area. This configuration allows the customer to finely set the alternative place of the delivery destination.

Even with a configuration in which the management apparatus 1B locates alternative candidate areas in the surrounding region of the delivery destination and presents the located alternative candidate areas to the customer, the online delivery system may have a configuration in which setting can be performed so that, after designating one of the alternative candidate areas, the customer can change the position of the designated alternative candidate area. This allows the customer to finely set the alternative candidate area.

### (Other modifications)

Although the management apparatus and so on according to one or more aspects have been described above based on the embodiments, the present disclosure is not limited to the above-described embodiments. Modes obtained by applying various modifications conceived by those skilled in the art to the embodiments or modifications or modes constituted by combining the constituent elements in different embodiments or modifications may also be encompassed by the scope of one or more aspects, as long as such modes do not depart from the spirit and scope of the present disclosure. For example, some of the above-described embodiments and modifications may also be combined together.

For example, although, in each embodiment described above, the parking-and-stopping prohibition decider 123 decides whether or not parking and stopping of vehicles are prohibited in the delivery destination area on the basis of the delivery destination area and the parking-and-stopping-prohibited areas, addresses and the parking-and-stopping-prohibited areas may be pre-associated with each other. This allows the parking-and-stopping prohibition decider 123 to decide whether or not parking and stopping of vehicles are prohibited in the delivery destination area on the basis of whether or not the delivery destination information received from the customer terminal 2 corresponds to a parking-and-stopping-prohibited area.

In each embodiment described above, the constituent elements may be implemented by dedicated hardware or may be implemented by executing a software program suitable for the constituent elements. A program executor, such as a CPU or a processor, may read and execute a software program recorded on/in a recording medium, such as a hard disk or a semiconductor memory, to thereby realize the constituent elements.

Some or all of the functions of the management apparatuses 1, 1A, and 1B according to the first to third embodiments are typically implemented as a large-scale integration (LSI), which is an integrated circuit. The functions may be individually realized by single chips or at least one or all of the functional blocks may be realized by a single chip. Circuit integration is not limited to LSI and may be realized by a dedicated circuit or a general-purpose processor. The present disclosure may also utilize a field programmable gate array (FPGA) that can be programmed after manufacture of an LSI or a reconfigurable processor that allows reconfiguration of connections and settings of circuit cells inside an LSI.

Also, a processor, such as a CPU, may execute a program to realize some or all of the functions of the management apparatus 1, 1A, and 1B according to the first to third embodiments.

The numbers used in the above description are all exemplary and illustrative for specifically describing the present disclosure and are not limited to those used above.

The order in which the steps illustrated in FIGS. 11, 20, and 25 are executed are exemplary and illustrative for specifically describing the present disclosure and may be an order other than the above-described order within the scope that can provide the same or similar advantages. Also, some of the above-described steps may be executed simultaneously (in parallel) with the other steps.

In addition, the present disclosure encompasses various modifications obtained by making changes in a scope conceived by those skilled in the art to each embodiment in the present disclosure, as long as such medications do not depart from the spirit of the present disclosure.

Some or all of the above-described constituent elements included in each of the above-described apparatuses may be implemented by an integrated circuit (IC) card detachable therefrom or a single independent module. The IC card or the module is a computer system including a microprocessor, a ROM, a RAM, and so on. The IC card or the module may include a super-multifunctional LSI. The microprocessor operates in accordance with the computer program, so that the IC card or the module realizes its functions. The IC card or the module may be tamper-proof.

The present disclosure may be implemented by the methods described above. Those methods may be implemented by a computer program executed by a computer or may be implemented by digital signals provided by the computer program. In the present disclosure, the computer program or the digital signals may be recorded in/on a computer-readable recording medium, such as a flexible disk, a hard disk, a CD-ROM, a magneto-optical (MO) disc, a digital versatile disc (DVD), a DVD-ROM, a DVD-RAM, a Blu-ray Disc (BD, registered trademark), or a semiconductor memory. The digital signals may be pre-recorded in any of the recording media. Also, in the present disclosure, the computer program or the digital signals may be transmitted through a telecommunications line, a wireless or wired communication channel, a network typified by the Internet, data broadcasting, or the like. In addition, the present disclosure may be implemented by a computer system including a microprocessor and a memory, and the memory may store the above-described computer program therein, and the microprocessor may operate in accordance with the computer program. The present disclosure may also be realized by another independent computer system by transferring the recording medium in/on which the program or the digital signals is/are recorded or transferring the program or the digital signals through the aforementioned network.

The management apparatus according to the present disclosure is applied to, for example, an online delivery system and a delivery method that accepts designation of a package delivery method using a self-driving vehicle and so on.

## Claims

1. A method for an online delivery system that includes a management apparatus and a customer terminal for communicating with the management apparatus through a network, the method comprising:
receiving, by the management apparatus, delivery destination information regarding a delivery destination of a package, the delivery destination information being transmitted from the customer terminal;
accepting designation of a package delivery method using a self-driving vehicle, the designation being transmitted from the customer terminal;
determining, based on the delivery destination information, a delivery destination area corresponding to the delivery destination information;
deciding, based on the delivery destination area, whether or not parking and stopping of vehicles are prohibited in the delivery destination area;
generating first notification information indicating whether or not delivery to the delivery destination indicated by the delivery destination information is possible using the self-driving vehicle, based on a result of the deciding; and
transmitting the first notification information to the customer terminal.

2. The method according to Claim 1,
wherein the determining determines the delivery destination area, based on a scheme of residential-address indication of an address indicated by the delivery destination information.

3. The method according to Claim 1, further comprising:
pre-storing, in a first memory, parking-and-stopping-prohibited area information regarding parking-and-stopping-prohibited areas of the vehicles,
wherein the deciding decides whether or not parking and stopping of the vehicles are prohibited in the delivery destination area, based on the delivery destination area and the parking-and-stopping-prohibited area information.

4. The method according to Claim 3,
wherein the deciding decides whether or not parking and stopping of the vehicles are prohibited in the delivery destination area, based on whether or not at least part of the delivery destination area includes a parking-and-stopping-prohibited area.

5. The method according to Claim 3, further comprising:
generating second notification information indicating the delivery destination area and the parking-and-stopping-prohibited areas when the first notification information, indicating that the delivery to the delivery destination is not possible using the self-driving vehicle, is generated; and
transmitting the second notification information to the customer terminal.

6. The method according to Claim 3,
wherein the parking-and-stopping-prohibited area information includes:
dynamic parking-and-stopping-prohibited area information regarding a dynamic parking-and-stopping-prohibited area where parking and stopping of the vehicles are prohibited in at least one of a particular time slot and a particular day of a week; and
static parking-and-stopping-prohibited area information regarding a static parking-and-stopping-prohibited area where parking and stopping of the vehicles are prohibited at all times, and
wherein, when the deciding decides that parking and stopping of the vehicles are prohibited in the delivery destination area, based on the delivery destination area and the dynamic parking-and-stopping-prohibited area information, the generating generates the first notification information to indicate that:
the delivery to the delivery destination is not possible using the self-driving vehicle in a particular period indicated by information of the particular time slot and the particular day of the week, the information being stored in association with the dynamic parking-and-stopping-prohibited area information; and
the delivery to the delivery destination is possible using the self-driving vehicle in a period other than the particular period.

7. The method according to Claim 3, further comprising:
pre-storing, in a second memory, parking-prohibited area information regarding parking-prohibited areas of the vehicles; and
second deciding whether or not parking of the vehicles is prohibited in the delivery destination area based on the delivery destination area and the parking-prohibited area information, when the deciding decides that parking and stopping of the vehicles are not prohibited in the delivery destination area,
wherein the generating generates the first notification information to indicate that the delivery to the delivery destination is possible using the self-driving vehicle with a condition that only stopping of the self-driving vehicle in the delivery destination area is permitted, when the deciding decides that parking and stopping of the vehicles are not prohibited in the delivery destination area and the second deciding decides that parking of the vehicles is prohibited in the delivery destination area.

8. The method according to Claim 7, further comprising:
generating second notification information indicating a pre-defined stopping-permitted period of the self-driving vehicle when the first notification information, indicating that the delivery to the delivery destination is possible using the self-driving vehicle with the condition that only stopping of the self-driving vehicle in the delivery destination area is permitted, is generated; and
transmitting the second notification information to the customer terminal.

9. The method according to Claim 3, further comprising:
determining a surrounding region of the delivery destination based on the delivery destination information, when the deciding decides that parking and stopping of the vehicles are prohibited in the delivery destination area;
locating an alternative candidate area of the delivery destination area, the alternative candidate area being an area where parking and stopping of the vehicles are not prohibited in the surrounding region, based on the surrounding region and the parking-and-stopping-prohibited area information;
generating second notification information indicating the alternative candidate area; and
transmitting the second notification information to the customer terminal.

10. The method according to Claim 9, further comprising:
generating third notification information indicating a history of the alternative candidate area, when the second notification information is generated; and
transmitting the third notification information to the customer terminal.

11. The method according to Claim 9, further comprising:
changing the surrounding region of the delivery destination based on the delivery destination information, when the alternative candidate area is not successfully located; and
locating another alternative candidate area of the delivery destination area in the changed surrounding region, parking and stopping of the vehicles not being prohibited in the other alternative candidate area.

12. The method according to Claim 1, further comprising:
generating second notification information indicating a position where the self-driving vehicle is to be parked or stopped in the delivery destination area when the first notification information, indicating that the delivery to the delivery destination is possible using the self-driving vehicle, is generated; and
transmitting the second notification information to the customer terminal.

13. The method according to Claim 1, further comprising:
generating second notification information indicating a delivery-method designation screen for designating the package delivery method, the delivery-method designation screen being set so that the package delivery method using the self-driving vehicle is not selectable when the first notification information, indicating that the delivery to the delivery destination is not possible using the self-driving vehicle, is generated; and
transmitting the second notification information to the customer terminal.

14. The method according to Claim 1, further comprising:
generating second notification information indicating that accepting designation of the package delivery method using the self-driving vehicle is disabled, when the first notification information, indicating that the delivery to the delivery destination is not possible using the self-driving vehicle, is generated; and
transmitting the second notification information to the customer terminal.

15. The method according to Claim 1, further comprising:
generating second notification information indicating a reason why the delivery to the delivery destination is not possible using the self-driving vehicle, when the first notification information, indicating that the delivery to the delivery destination is not possible using the self-driving vehicle, is generated; and
transmitting the second notification information to the customer terminal.

16. The method according to Claim 1, further comprising:
storing, in a memory, road traffic laws that define at least parking-prohibited areas,
wherein the deciding decides whether or not parking and stopping of the vehicles are prohibited in the delivery destination area, based on the delivery destination area and the road traffic laws.

17. The method according to Claim 1, further comprising:
obtaining, from an external institution, information regarding locations of specific activities or specific facilities,
wherein the deciding decides whether or not parking and stopping of the vehicles are prohibited in the delivery destination area, based on the delivery destination area and the information regarding the locations of the specific activities or the specific facilities.

18. A management apparatus that is used in an online delivery system and that communicates with a customer terminal through a network, the management apparatus comprising:
a receiver that receives delivery destination information regarding a delivery destination of a package, the delivery destination information being transmitted from the customer terminal;
an accepter that accepts designation of a package delivery method using a self-driving vehicle, the designation being transmitted from the customer terminal;
a determiner that determines, based on the delivery destination information, a delivery destination area corresponding to the delivery destination information;
a decider that decides, based on the delivery destination area, whether or not parking and stopping of vehicles are prohibited in the delivery destination area;
a generator that generates first notification information indicating whether or not delivery to the delivery destination indicated by the delivery destination information is possible using the self-driving vehicle, based on a result of a decision of the decider as to whether or not parking and stopping of the vehicles are prohibited in the delivery destination area; and
a transmitter that transmits the first notification information to the customer terminal.

19. A computer-readable non-transitory recording medium having stored therein a program for controlling a management apparatus that is used in an online delivery system and that communicates with a customer terminal through a network, the program causing, when executed by a computer included in the management apparatus, execution of operations comprising:
receiving delivery destination information regarding a delivery destination of a package, the delivery destination information being transmitted from the customer terminal;
accepting designation of a package delivery method using a self-driving vehicle, the designation being transmitted from the customer terminal;
determining, based on the delivery destination information, a delivery destination area corresponding to the delivery destination information;
deciding, based on the delivery destination area, whether or not parking and stopping of vehicles are prohibited in the delivery destination area;
generating first notification information indicating whether or not delivery to the delivery destination indicated by the delivery destination information is possible using the self-driving vehicle, based on a result of the deciding as to whether or not parking and stopping of the vehicles are prohibited in the delivery destination area; and
transmitting the first notification information to the customer terminal.

20. A management apparatus that is used in an online delivery system and that communicates with a customer terminal through a network, the management apparatus comprising:
processing circuitry; and
a memory including at least one set of instructions that, when executed by the processing circuitry, causes the processing circuitry to perform operations including:
receiving delivery destination information regarding a delivery destination of a package, the delivery destination information being transmitted from the customer terminal;
accepting designation of a package delivery method using a self-driving vehicle, the designation being transmitted from the customer terminal;
determining, based on the delivery destination information, a delivery destination area corresponding to the delivery destination information;
deciding, based on the delivery destination area, whether or not parking and stopping of vehicles are prohibited in the delivery destination area;
generating first notification information indicating whether or not delivery to the delivery destination indicated by the delivery destination information is possible using the self-driving vehicle, based on a result of the deciding as to whether or not parking and stopping of the vehicles are prohibited in the delivery destination area; and
transmitting the first notification information to the customer terminal.
